# EUROPÄISCHE PATENTSCHRIFT

(11) **EP 3 930 205 B1**
(45) Veröffentlichungstag und Bekanntmachung des Hinweises auf die Patenterteilung: **03.08.2022**
(21) Anmeldenummer: 20182053.7
(22) Anmeldetag: 24.06.2020
(51) Int. Cl.: H04B 3/52, H01P 3/06, H01P 3/00

(54) **DATENÜBERTRAGUNGSSYSTEM**
DATA TRANSMISSION SYSTEM
SYSTÈME DE TRANSFERT DE DONNÉES

(43) Veröffentlichungstag der Anmeldung: 29.12.2021
(73) Patentinhaber: Rosenberger Hochfrequenztechnik GmbH & Co. KG, 83413 Fridolfing (DE)
(72) Erfinder: Wollitzer, Michael, 83413 Fridolfing (DE); Reiter, Helmut, 83329 Waging am See (DE)
(74) Vertreter: Lorenz, Markus

(56) Entgegenhaltungen:
- US-A1- 2017 018 833
- US-B2- 10 673 116

## Beschreibung

Die vorliegende Erfindung betrifft ein Datenübertragungssystem mit den Merkmalen des Patentanspruchs 1.

### TECHNISCHER HINTERGRUND

Beleuchtungssysteme auf der Basis von Schienen sind im privaten und gewerblichen Bereich seit Langem im Einsatz.

Die einzelnen Leuchten werden jeweils entlang der Schiene typischerweise über Einklicken der Leuchte bzw. der Leuchtenhalterung am Schienenprofil befestigt. In der Schiene sind berührsicher elektrische Leitungen zur Versorgung der einzelnen Leuchten mit der erforderliche ein- oder mehrphasigen Wechselspannung aus dem Energieversorgungsnetz, beispielsweise 230 V AC, verlegt. Für eine Ansteuerung der Leuchten, beispielsweise für das Dimmen der Leuchten, sind zusätzliche elektrische Leitungen für Gleichspannung, beispielsweise 42 V DC, oder ein Datenbus mit einer niedrigen Datenübertragungsrate in der Schiene verlegt. Das Schienensystem ist typischerweise an einer Decke eines Raumes bzw. einer Halle mechanisch befestigt und mit den zugehörigen Gleichspannungs- und Wechselspannungsleitungen der Gebäudeinstallation elektrisch verbunden.

Datenübertragung innerhalb von Gebäuden zwischen verschiedenen Endgeräten, beispielsweise Server, Drucker usw., erfolgt typischerweise über Kabel. Als Datenübertragungsstandard innerhalb von Gebäuden hat sich Ethernet nach IEEE 802.3 etabliert. Bei Verwendung von Glasfaserleitungen lassen sich hierbei Datenübertragungsraten bis in den dreistelligen Gbit/s-Bereich realisieren. Die Übertragung der Daten zwischen zwei Endgeräten erfolgt bei Ethernet über ein zwischen den beiden Endgeräten jeweils verlegtes Datenkabel (sogenannte peer-to-peer-Übertragung). Alternativ erfolgt die Datenübertragung bei Ethernet über einzelne Router oder Switches, an die die einzelnen Endgeräte jeweils über ein Datenkabel angeschlossen sind, und über zwischen den einzelnen Routern bzw. Switches verlegte Datenkabel. In beiden Fällen ist das Volumen an Datenverkabelung innerhalb eines Gebäudes und damit der hierfür erforderliche Raum- und Energiebedarf sowie der Aufwand für Planung und Inbetriebsetzung der Gebäudeverkabelung deutlich angestiegen.

Dies ist ein Zustand, den es zu verbessern gilt.

Zum allgemeinen Stand der Technik sei auf die US 10,673,116 B2 und auf die US 2017/018833 A1 verwiesen, die jeweils ein konfigurierbares Datenübertragungssystem mit einer flexiblen Leitung für den Außenbereich mit reduzierten Übertragungsverlusten betreffen.

### BESCHREIBUNG DER ERFINDUNG

Vor diesem Hintergrund liegt der vorliegenden Erfindung die Aufgabe zugrunde, ein Datenübertragungssystem innerhalb von Gebäuden zu schaffen, in dem das Volumen an Datenleitungen, insbesondere das gesamte Längenvolumen an Datenleitungen, im Hinblick auf reduzierten Raum- und Energiebedarf optimiert ist.

Erfindungsgemäß wird diese Aufgabe durch ein Datenübertragungssystem mit den Merkmalen des Patentanspruchs 1 gelöst.

Demgemäß ist vorgesehen:
Ein Datenübertragungssystem aufweisend
- einen Datenübertragungskanal und
- mehrere Sende- und Empfangs-Einheiten,
- wobei der Datenübertragungskanal eine elektrische Leitung ist,
- welche eine Schiene aus einem elektrisch isolierenden Material und
- wenigstens einen elektrischen Leiter aufweist,
- wobei die Schiene mantelflächenseitig von einem der elektrischen Leiter (des wenigstens einen elektrischen Leiter) umschlossen ist und/oder
- die Schiene mindestens zwei der elektrische Leiter (des wenigstens einen elektrischen Leiters) jeweils voneinander beabstandet,
- wobei die mehreren Sende- und Empfangs-Einheiten entlang der Schiene angeordnet sind und
- wobei die mehreren Sende- und Empfangs-Einheiten jeweils eingerichtet sind, eine elektromagnetische Welle in die elektrische Leitung einzukoppeln oder aus der elektrischen Leitung auszukoppeln.

Die der vorliegenden Erfindung zugrunde liegenden Erkenntnis/Idee besteht darin, einen Datenübertragungskanal für eine Datenübertragung zwischen mehreren Endgeräten, bevorzugt deutlich mehr als zwei Endgeräten, zu schaffen. Hierzu wird ein elektrischer Datenübertragungskanal zwischen mehreren Sende- und Empfangs-Einheiten verwendet, die jeweils zu einem Endgerät gehören. Der Datenübertragungskanal umfasst eine Schiene aus einem elektrisch isolierenden Werkstoff und wenigstens einen elektrischen Leiter. Der wenigstens eine elektrische Leiter erstreckt sich hierbei jeweils entlang der gesamten Längserstreckung der dielektrischen Schiene.

Um eine Ausbreitung einer elektromagnetischen Welle in einem derartigen Datenübertragungskanal zu ermöglichen, ist die elektrisch isolierende Schiene in einer ersten Ausprägung des Datenübertragungskanals mantelflächenseitig von einem elektrischen Leiter umgeben. Eine dielektrische Schiene, deren Außenoberfläche mantelflächenseitig mit einer metallischen Schicht beschichtet ist, ermöglicht die Ausbreitung einer elektromagnetischen Welle, insbesondere einer TEM-Welle, in beiden Längsachsrichtungen der Schiene.

In einer zweiten Ausprägung des Datenübertragungskanals sind innerhalb der dielektrischen Schiene zwei elektrische Leiter angeordnet, die durch die dielektrische Schiene voneinander beabstandet angeordnet sind. Zwischen den beiden elektrischen Leitern kann sich ebenfalls eine elektromagnetische Welle, insbesondere eine TEM-Welle, in beiden Längsachsrichtungen der Schiene ausbreiten. Es kann sich insbesondere eine hochfrequente elektromagnetische Welle im differentiellen Mode ausbreiten, die zu einem differentiellen Hochfrequenzsignal korrespondiert.

In einer dritten Ausprägung des Datenübertragungskanals wird in Ergänzung zur zweiten Ausprägung die dielektrische Schiene mantelflächenseitig mit einer metallischen Schicht beschichtet. In einem derartigen Datenübertragungskanal können sich zwei Moden einer elektromagnetischen Welle, nämlich einen Gleichtakt- und einen Gegentakt-Mode, ausbreiten. Die beiden elektrischen Leiter innerhalb der dielektrischen Schiene bilden die beiden Innenleiter, die mantelflächige Beschichtung den Außenleiter des Datenübertragungskanals. Durch die Außenleiterbeschichtung wird die Führung der elektromagnetischen Welle verbessert und der Umfang des Streufeldes um den Signalleiter verringert. Somit kann die Übertragungsfrequenz der elektromagnetischen Welle erhöht werden.

In einer vierten Ausprägung des Datenübertragungskanals verläuft ein elektrischer Leiter innerhalb der dielektrischen Schiene, während die dielektrische Schiene mantelflächenseitig mit einer metallischen Schicht beschichtet ist. Auf diese Weise wird ein Übertragungskanal mit einer koaxialen Struktur aus Innen- und Außenleiter ausgebildet, der eine Ausbreitung einer Mode einer hochfrequenten elektromagnetischen Welle in beiden Längsachsrichtungen der Schiene ermöglicht.

Zusätzlich ist auch ein Übertragungskanal mit mehreren elektrischen Einzelleitern und/oder mit mehreren Paaren von elektrischen Leitern denkbar. Die Paare von elektrischen Leitern sind jeweils innerhalb der dielektrischen Schiene entweder parallel oder überkreuzt zueinander angeordnet. Bei Vorliegen eines Au-ßenleiters können sich in einem derartigen Übertragungskanal eine der Anzahl von Innenleitern entsprechende Anzahl von Moden einer elektromagnetischen Welle ausbreiten.

In allen Ausprägungen eines Übertragungskanals kann sich eine hochfrequente elektromagnetische Welle entlang der Schiene ausbreiten. Die hochfrequente elektromagnetische Welle wird hierbei entlang der Schiene geführt.

Im Vergleich zur Freiraumdämpfung einer elektromagnetischen Welle bei einer Freiraumausbreitung über einen Funkkanal ist die Transmissionsdämpfung einer elektromagnetischen Welle im schienengebundenen Datenübertragungssystem für eine Längserstreckung der Schiene von einigen wenigen 100 m kleiner. Durch die Führung der elektromagnetischen Welle entlang der Schiene ist die Koppeldämpfung zwischen benachbarten schienenbasierten Datenübertragungssystem höher als bei benachbarten Funkkommunikationsnetzen. Deshalb ist der minimal mögliche Abstand zwischen zwei schienenbasierten Datenübertragungssystemen kleiner als bei benachbarten Funkkommunikationsnetzen.

Der realisierbare Frequenzbereich der hochfrequenten elektromagnetischen Welle, die sich auf einer Schiene ausbreitet, kann durch die Außenleiterbeschichtung der dielektrischen Schiene erhöht werden. Unter Hochfrequenz wird hierbei bevorzugt ein Frequenzbereich zwischen 1 MHz und 500 GHz, besonders bevorzugt ein Frequenzbereich zwischen 10 MHz und 20 GHz und ganz besonders ein Frequenzbereich zwischen 500 MHz und 6 GHz verstanden.

Die metallische Außenleiterbeschichtung der dielektrischen Schiene ist vorzugsweise mit einem Bezugspotential, bevorzugt einem Massepotential, der Sende- und Empfangs-Einheiten elektrisch verbunden. Zur Ein- und Auskopplung einer elektromagnetischen Welle über eine Feldkopplung ist die elektrisch leitende Beschichtung im Bereich der Sende-Empfangs-Einheiten jeweils bevorzugt freigelegt. Eine galvanische Ein- und Auskopplung einer elektromagnetischen Welle über die Außenleiterschirmung der dielektrischen Schiene ist aber auch realisierbar.

Sind die einzelnen Sende- und Empfangseinheiten entlang der Schiene jeweils angeordnet und jeweils derart eingerichtet, eine elektromagnetische Welle in die elektrische Leitung einzukoppeln oder aus der elektrischen Leitung auszukoppeln, so kann eine TEM-Welle mit Daten von einer Sende-Empfangs-Einheit in den Übertragungskanal eingespeist und diese über den Übertragungskanal sich ausbreitende TEM-Welle von einer anderen Sende-Empfangs-Einheit aus dem Übertragungskanal ausgespeist werden.

Sind die einzelnen Sende-Empfangs-Einheiten jeweils an verschiedenen Orten in einem Gebäude positioniert und an der gemeinsamen Schiene angeordnet, so ist auf diese Weise eine Datenübertragung zwischen mehreren Endgeräten möglich. Die elektrische Leitungslänge eines derartigen Datenübertragungssystems ist auf die Längserstreckung der Schiene beschränkt. Diese Datenübertragung ist gegenüber der summierten elektrischen Leitungslänge einer peer-to-peer-Übertragung oder einer Übertragung über Router bzw. Switches bei einer gleichen Anzahl von Endgeräten reduziert.

Ein derartiges Datenübertragungssystem kann beispielsweise in Großraumbüros, Fertigungs- und Lagerhallen, Logistikzentren, Supermärkten und Mails zum Einsatz kommen. Die Längserstreckung eines derartigen schienenbasierten Datenübertragungssystems ist bevorzugt größer als 5 m und kleiner als 500 m, insbesondere bevorzugt größer 10 m und kleiner als 300 m und ganz besonders bevorzugt größer als 20 m und kleiner als 100 m.

Das schienenbasierte Datenübertragungssystem kann zum Übertragen von Daten zwischen mehreren Endgeräten eingesetzt werden, welche jeweils über eine Sende-Empfangs-Einheit mit dem schienenbasierten Übertragungskanal gekoppelt sind. Die Endgeräte können im einfachsten Fall Sensoren mit integrierter Sensorsignalverarbeitung, beispielsweise ein thermischer Sensor oder eine Überwachungskamera, oder Aktuatoren mit integrierter Ansteuerungselektronik, beispielsweise ein Stellmotor zum Öffnen bzw. Schließen eines Fensters, sein. Die Endgeräte können auch eine höhere technische Funktionalität aufweisen, wie beispielsweise ein Drucker, ein Personal Computer oder ein Datenerfassungsgerät. Es ist auch denkbar, Komponenten wie Funk-Accesspoints (deutsch: Funk-Zugangspunkte) über das Schienensystem anzubinden.

Alternativ können am schienenbasierten Datenübertragungssystem zusätzlich zu den einzelnen Sende-Empfangs-Einheiten auch ein oder mehrere Leuchten angeordnet sein. Hierzu sind in Ergänzung zu den als Datenleitungen jeweils dienenden elektrischen Leiter weitere elektrische Leitungen zur Spannungsversorgung und zur Ansteuerung der einzelnen Leuchten in die elektrisch isolierende Schiene zu integrieren. Die Leuchten können aber auch wie die Endgeräte über zugehörige Sende-Empfangs-Einheiten in das schienenbasierte Datenübertragungssystems integriert werden. Es ist weiterhin denkbar, auf elektrischen Leitern zur Stromversorgung zusätzlich jeweils Datensignale zu übertragen.

Die Sende-Empfangs-Einheit kann entweder im zugehörigen Endgerät integriert sein oder vom zugehörigen Endgerät separiert sein und mit diesem über eine drahtlose Datenverbindung oder eine festverdrahtete Datenverbindung verbunden sein. Denkbar ist auch, dass mehrere Endgeräte mit einer gemeinsamen Sende-Empfangs-Einheit verbunden sind.

Die einzelnen Sende-Empfangs-Einheiten sind bevorzugt direkt angrenzend an der elektrisch isolierenden Schiene positioniert und direkt mit der Schiene mechanisch verbunden. Als mechanische Fixierung kann in Analogie zur Befestigung einer Leuchte an einer Schiene ein Klick-Mechanismus dienen, bei dem beispielsweise ein oder mehrere Rasthaken oder dgl. der Sende-Empfangs-Einheit jeweils in eine korrespondierende Rastausnehmung oder Rastnut der Schiene einrastet. Alternativ ist auch eine Schraub- oder Klebeverbindung oder eine andere geeignete Verbindung möglich. Die einzelne Sende-Empfangs-Einheit ist aber auch beabstandet zur Schiene über eine zusätzliche Vorrichtung an die Schiene befestigbar. Denkbar ist auch, dass ein Teilbereich der Sende-Empfangs-Einheit über eine in der Schiene vorgesehene Ausnehmung in die Schiene hineinragt. Die einzelnen Sende-Empfang-Einheiten können je nach räumlicher Positionierung der zugehörigen Endgeräte innerhalb des Gebäudes an entsprechenden axialen Positionen über die gesamte Längserstreckung der Schiene verteilt angeordnet sein. Auch eine Positionierung von mehreren Sende-Empfangs-Einheiten, bevorzugt von zwei Sende-Empfangs-Einheiten, an derselben axialen Position der Schiene ist realisierbar.

Die Sende- und Empfangs-Einheit kann typische analoge Komponenten bzw. Funktionseinheiten zum Senden und Empfangen wie beispielsweise Verstärker, Filter, Mischer usw. und gemischtdigital-analoge Funktionseinheiten wie Analog-Digital-Wandler oder Digital-Analog-Wandler enthalten. Darüber hinaus kann eine Sende-Empfang-Einheit alle gängigen digitalen Signalverarbeitungs-Funktionseinheiten zum Senden und Empfangen wie beispielsweise (De)-Modulation, (De)-Kodierung, Signalentzerrung usw. enthalten. Die digitalen Signalverarbeitungs-Funktionseinheiten können in Software oder in Hardware (z.B. FPGA oder ASIC) implementiert sein.

Die elektrisch isolierende Schiene wird bevorzugt mittels eines Extrusionsprozesses aus einem dielektrischen Material hergestellt. Als dielektrische Werkstoffe eignen sich hierfür die gängigen dielektrischen Materialen zum elektrischen Isolieren mit möglichst kleinen dielektrischen Verlusten wie beispielsweise Polypropylen, Polyethylen, Polytetrafluorethylen (PTFE) usw. Unter einer Schiene wird hierbei und im Folgenden ein starrer Körper verstanden, dessen Längserstreckung ein Vielfaches seiner Quererstreckung ist. Eine Schiene weist bevorzugt über ihre gesamte Längserstreckung ein konstantes Querschnittsprofil auf. Die Längserstreckung der Schiene ist limitiert und endlich.

Die elektrisch isolierende Schiene weist bevorzugt eine geradlinige Längserstreckung auf. Alternativ ist aber auch eine Schiene mit gekrümmten bzw. gebogenen Längserstreckungsverlauf denkbar. Die Krümmung bzw. die Biegung kann hierbei über die gesamte Längserstreckung oder über einen oder mehrere Teilabschnitte der Längserstreckung ausgebildet sein.

Das Querschnittsprofil der elektrisch isolierenden Schiene kann in allen gängigen und technisch sinnvollen Profilformen ausgebildet sein. Bei einer elektrisch isolierenden Schiene mit einem einzigen innerhalb der Schiene angeordneten elektrischen Leiter und einem elektrischen Leiter, der als elektrisch leitende Beschichtung auf der Außenoberfläche der Schiene ausgebildet ist, ist ein rundes Querschnittsprofil zur Realisierung einer koaxialen Struktur vorteilhaft. Daneben ist aber auch ein quadratisches, rechteckförmiges, dreieckförmiges, vieleckförmiges bzw. polygonales, ovales oder elliptisches Querschnittsprofil oder Ähnliches möglich. Die Wahl des Querschnittsprofils richtet sich vielmehr nach der Anzahl und Anordnung der innerhalb der Schiene angeordneten elektrischen Leiter.

Das Profil der Schiene kann bevorzugt über seine gesamte Längserstreckung auch Hohlräume aufweisen.

Der mindestens eine elektrische Leiter kann bevorzugt jeweils als eine metallische Schiene ausgebildet sein. Alternativ ist auch eine Realisierung als Runddraht oder als Vierkantdraht möglich. Bevorzugt werden die einzelnen elektrischen Leiter innerhalb der dielektrischen Schiene in einem gemeinsamen Extrusions-Prozess hergestellt.

Alternativ können im Extrusions-Prozess in der dielektrischen Schiene für die einzelnen elektrischen Leiter jeweils Hohlräume, d. h. Durchführungen, oder Ausnehmungen über die gesamte Längserstreckung der Schiene ausgebildet werden. In diesen Durchführungen bzw. Ausnehmungen werden nach dem oder während des Extrusions-Prozess(es) die einzelnen elektrischen Leiter eingefügt und an der Schiene fixiert.

Die mechanische Befestigung jedes elektrischen Leiters in der dielektrischen Schiene kann kraftschlüssig über eine Presspassung in der zugehörigen Ausnehmung bzw. Durchführung erfolgen. Alternativ ist eine stoffschlüssige Verbindung mittels beispielsweise Kleben denkbar. Auch ein formschlüssiges Verbinden ist möglich, wenn die axialen Enden der Schiene mit jeweils einer Kappe verschließbar sind. Eine weitere Möglichkeit einer formschlüssigen Verbindung ist denkbar, wenn die axialen Enden der einzelnen elektrischen Leiter, die über die axialen Enden der Schiene hinausragen, bevorzugt mittels eines thermischen Verfahrens um beispielsweise 90° umgeformt werden.

Falls die Lage der einzelnen elektrischen Leiter innerhalb der dielektrischen Schiene von außerhalb der Schiene zugänglich ist, beispielsweise bei Ausbildung einer nutförmigen Ausnehmung über die gesamte Längserstreckung der Schiene, kann der einzelne elektrische Leiter auch über ein Beschichtungsverfahren auf der dielektrischen Schiene aufgebaut werden.

Als metallische Werkstoffe für die elektrischen Leiter innerhalb der dielektrischen Schiene können gängige Materialien wie beispielsweise Kupfer oder Messing verwendet werden. Die elektrischen Leiter sollten im Hinblick auf geringe Leitungsverluste mit einer elektrisch sehr gut leitfähigen Oberflächenbeschichtung versehen sein, deren Dicke auf die Frequenz der zu übertragenden Signale angepasst ist.

Die Signalleiter erzeugen zusammen mit der dielektrischen Schiene und der metallischen Umrandung einen Wellenleiter mit einem vorbestimmten, über die Leitungslänge homogenen Wellenwiderstand.

Vorteilhafte Ausgestaltungen und Weiterbildungen ergeben sich aus den weiteren Unteransprüchen sowie aus der Beschreibung unter Bezugnahme auf die Figuren der Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

In einer bevorzugten Ausprägung der Erfindung speisen alle Sende-Empfangs-Einheiten jeweils mittels einer Feldkopplung eine elektromagnetische Welle in die elektrische Leitung ein bzw. aus der elektrischen Leitung aus. Hierzu ist jede Sende-Empfangs-Einheit über eine zugehörige Koppelvorrichtung mit dem schienenbasierten Datenübertragungskanal gekoppelt. Da die einzelnen Kopplungsvorrichtungen jeweils reflexionsminimiert ausgelegt werden können, kann bei impedanzangepasstem Abschluss der axialen Enden des schienenbasierten Datenübertragungskanals die Reflexion der elektromagnetischen Welle im Datenübertragungskanal deutlich gesenkt werden.

Erfolgt die Datenübertragung zwischen zwei Sende-Empfangs-Einheiten über eine zwischengeschaltete Sende-Empfangs-Einheit, welche bevorzugt in der Mitte des Datenübertragungskanals positioniert ist und als Zugangspunkt (englisch: Access-Point) agiert, so kann die als Zugangspunkt agierende Sende-Empfangs-Einheit alternativ zur Feldkopplung auch über eine galvanische Kopplung mit dem Datenübertragungskanal gekoppelt sein. Die als Zugangspunkt agierende Sende-Empfangs-Einheit ist bei jeder Datenübertragung im schienenbasierten Datenübertragungskanal entweder als Sender oder als Empfänger aktiv. Somit stellen die elektrischen Leiter, die bei einer galvanischen Kopplung die als Zugangspunkt agierende Sende-Empfangs-Einheit mit den elektrischen Leitern des schienenbasierten Datenübertragungskanals verbinden, keine elektrischen Stichleiter des Datenübertragungskanals dar. Die galvanische Kopplung ist bei der als Zugangspunkt agierenden Sende-Empfangs-Einheit somit wie die alternative Feldkopplung reflexionsminimiert ausgelegt.

Jeder innerhalb der dielektrischen Schiene verlaufende elektrische Leiter ist bei einer galvanischen Kopplung jeweils über zwei elektrische Leiter mit der als Zugangspunkt agierenden Sende-Empfangs-Einheit verbunden. Die beiden elektrischen Leiter der galvanischen Kopplung sind in einem axialen Abstand von λ/4·(2n+1), bevorzugt λ/4, mit dem zugehörigen elektrischen Leiter des schienenbasierten Datenübertragungskanals verbunden. Hierbei ist λ die Wellenlänge der im Datenübertragungskanal sich ausbreitenden elektromagnetischen Welle und n ist ein nichtnegativer ganzzahliger Faktor.

In einer weiteren bevorzugten Ausprägung der Erfindung weist die dielektrische Schiene entlang ihrer Längserstreckung in Analogie zum Schienensystem für Leuchten eine Ausnehmung auf. Diese Ausnehmung erstreckt sich bevorzugt über die gesamte Längserstreckung und weist bevorzugt ein rechteckförmiges Querschnittsprofil auf. Denkbar sind aber auch andere technisch sinnvolle Querschnittsprofile, beispielsweise ein dreieckförmiges oder ein vieleckförmiges Querschnittsprofil. Die Ausnehmung dient einerseits zur mechanischen Befestigung der einzelnen Sende-Empfangs-Einheiten an der Schiene, zur mechanischen Befestigung der Schiene am Gebäude, bevorzugt an einer Raum- oder Hallendecke, und zur Anordnung bzw. Führung der einzelnen elektrischen Leiter.

Die mechanische Befestigung der einzelnen Sende-Empfangs-Einheiten an der Schiene und der Schiene am Gebäude ist für die Erfindung nicht wesentlich. Sie kann mit fachüblichen Befestigungstechniken gelöst werden.

Der einzelne elektrische Leiter ist bevorzugt am Boden der Ausnehmung angeordnet und in oder an der dielektrischen Schiene befestigt. Sind zwei und mehrere elektrische Leiter innerhalb der dielektrischen Schiene angeordnet, so sind diese geeignet beabstandet voneinander am Boden der Ausnehmung anzuordnen und mit der dielektrischen Schiene zu befestigen. Die einzelnen elektrischen Leiter können alternativ jeweils in einer zugehörigen Nut geführt und form-, kraft- oder stoffschlüssig mit der dielektrischen Schiene verbunden sein. Die einzelnen Nuten können bevorzugt an den Seitenwänden und/oder am Boden der Ausnehmung ausgebildet sein. Neben den Nuten für die elektrischen Leiter zur Datenübertragung können in der Ausnehmung der dielektrischen Schiene zusätzliche Nuten für weitere elektrische Leiter zur Spannungsversorgung der einzelnen Sende-Empfangs-Einheiten und der einzelnen Leuchten vorgesehen sein. Die einzelnen elektrischen Leiter können aber auch vollständig im dielektrischen Bereich der Schiene geführt sein und somit weder in der Ausnehmung noch in einer an die Ausnehmung angrenzenden Nut angeordnet sein.

Weist eine dielektrische Schiene mit einer Ausnehmung in Längsachsrichtung neben einem Innenleiter auch eine mantelflächige metallische Außenleiterbeschichtung auf, so liegt ein Datenübertragungskanal mit einem "quasi-koaxialen" Querschnittsprofil vor. Auch in einem derartigen "quasi-koaxialen" Datenübertragungskanal kann sich eine hochfrequente elektromagnetische Welle bis in den GHz-Bereich ausbreiten.

Erfindungsgemäß ist vorgesehen, dass die Ein- und Ausspeisung einer elektromagnetischen Welle zwischen jeder Sende-Empfangs-Einheit und der elektrischen Leitung elektromagnetisch über eine zur elektromagnetischen Nahfeldkopplung zwischen der Sende-Empfangs-Einheit und der elektrischen Leitung angeordneten Koppelvorrichtung erfolgt. Eine derartige Feldkopplung tritt auf, wenn die elektrischen Größen nicht mehr stationär, sondern zeitlich veränderlich, d. h. bevorzugt größer als 1 MHz, sind. In diesem Fall treten die elektrischen und magnetischen Felder nicht mehr losgelöst, sondern nur noch kombiniert in Form von elektromagnetischen Feldern auf.

Eine Koppelvorrichtung, wenn sie nicht an den axialen Enden des schienenförmigen Datenübertragungskanals positioniert ist, kann prinzipiell in beiden Längsachsrichtungen der Schiene eine elektromagnetische Welle in den Datenübertragungskanal einkoppeln resp. senden. Die Koppelvorrichtung dient zur Nahfeldkopplung mit dem HF-Übertragungskanal in beiden Kopplungsrichtungen, d. h. Einspeisen bzw. Senden und Ausspeisen bzw. Empfangen.

Aufgrund von Reflexionen im Datenübertragungskanal ergibt sich eine Überlagerung der miteinander interferierenden Reflexionen entlang der elektrischen Leitung. Die eingekoppelte hochfrequente elektromagnetische Welle wird aufgrund der Reflexionen in eine Vielzahl von Wellenanteilen zerlegt. Jede reflektierte elektromagnetische Welle breitet sich somit über eine unterschiedliche Wegstrecke aus und erfährt somit eine unterschiedliche Amplituden- und Phasenverzerrung. Empfangen wird eine hochfrequente elektromagnetische Welle aus der Überlagerung von mehreren elektromagnetischen Wellenanteilen, die in den unterschiedlich langen Wegstrecken jeweils unterschiedlich amplituden- und phasenverzerrt werden. Hierbei kann es abhängig von den einzelnen Wegstrecken und der Frequenz der elektromagnetischen Welle zu einer destruktiven Interferenz kommen, die sich nachteilig als Fading in einem bestimmten Frequenzbereich bemerkbar macht. Diese destruktive Überlagerung von interferierenden Reflexionen innerhalb des dielektrischen Schienensystems kann somit analog zur Überlagerung von elektromagnetischen Wellen in einem mobilen Mehrwegeübertragungskanal betrachtet werden. Zur Verbesserung einer Signalentzerrung des empfangenen Hochfrequenz(HF)-Signals im Empfänger wird vorteilhaft das so genannte räumliche Multiplexen unter Ausnutzung von Raum-Diversität benutzt.

Erfindungsgemäß weist die Koppelvorrichtung mehrere Koppelelemente mit jeweils einem elektrischen Anschluss und/oder wenigstens ein Koppelelement (vorzugsweise ein räumlich ausgedehntes Koppelelement) mit jeweils zwei elektrischen Anschlüssen auf. Jeder elektrische Anschluss eines Koppelelements ist jeweils elektrisch mit der zur Koppelvorrichtung gehörigen Sende-Empfangs-Einheit elektrisch verbunden. Über den elektrischen Anschluss des Koppelelements wird von der Sende-Empfangs-Einheit ein HF-Signal in die Koppelvorrichtung eingespeist oder von der Koppelvorrichtung ein HF-Signal in die Sende-Empfangs-Einheit ausgespeist. Somit lässt sich mit einer Anordnung aus einem derartigen schienenbasierten Datenübertragungskanal und einer derartig ausgebildeten Koppelvorrichtung ein Multiple-Input-Multiple-Output-Übertragungssystem (MIMO-Übertragungssystem) verwirklichen. In Kombination mit einer weiter unten im Detail noch zu erläuternden MIMO-Entzerrung lassen sich vorteilhaft derartig verzerrte Empfangssignale mit einer guten Entzerrungsqualität entzerren.

Für einen schienenbasierten Übertragungskanal mit zwei elektrischen Leitern ist bevorzugt eine 2x2-MIMO-Struktur mit einer Koppelvorrichtung aus zwei Koppelelementen mit jeweils einem elektrischen Anschluss oder ein räumlich ausgedehntes Koppelelement mit zwei elektrischen Anschlüssen auszubilden, die jeweils bidirektional für Einspeisen / Senden und Ausspeisen / Empfangen genutzt werden. Im Fall von mehreren elektrischen Leitern in der Schiene mit einer höheren Anzahl von ausbreitungsfähigen Moden kann der Rang der MIMO-Struktur auch höher sein, beispielsweise eine 3×3-MIMO-Struktur, eine 4×4-MIMO-Struktur oder allgemein eine nxn-MIMO-Struktur (n ist hierbei eine natürliche Zahl). Die maximal sinnvolle Anzahl von elektrischen Anschlüssen entspricht der doppelten Anzahl von zu übertragenden Moden im Schienensystem. Die summierte Anzahl der elektrischen Anschlüsse aller in der Koppelvorrichtung jeweils enthaltenen Koppelelemente, die jeweils zum Ein- und Auskoppeln einer elektromagnetischen Welle bzw. eines dazu korrespondierenden elektrischen Signals dienen, muss nicht in jeder Koppelvorrichtung dem Rang des MIMO-Struktur entsprechen, sondern kann auch bei einigen Koppelvorrichtungen kleiner sein.

Erfindungsgemäß ist in jeder Sende-Empfangs-Einheit jeweils eine Einheit zur MIMO-Entzerrung und eine Einheit zur MIMO-Ansteuerung vorgesehen, die jeweils mit den elektrischen Anschlüssen der Koppelelemente der zur Sende-Empfangs-Einheit gehörigen Koppelvorrichtung verbunden sind, vorzugsweise über zwischengeschaltete analoge und/oder digitale Signalverarbeitungs-Einheiten.

In der Einheit zur MIMO-Entzerrung erfolgt eine Rekonstruktion der Daten der HF-Signale, welche von der sendenden Sende-Empfangs-Einheit gesendet werden. Unter Ausnutzung von räumlicher Diversität wird hierbei die Verzerrung der gesendeten HF-Signale aufgrund der unterschiedliche Ausbreitungswege im schienenbasierten Übertragungssystems entzerrt. Die Diversität wird durch eine sender- und empfängerseitige Mehrantennenanordnung realisiert. Die Mehrantennenanordnung ist durch eine sender- und empfängerseitige Koppelvorrichtung mit mehreren Koppelelementen ausgebildet. Diese Koppelelemente weisen entweder jeweils einen elektrischen Anschluss zur zugehörigen Sende-Empfangs-Einheit oder jeweils zwei elektrische Anschlüsse zur zugehörigen Sende-Empfangs-Einheit auf. Zur MIMO-Entzerrung können gängige MIMO-Entzerrungsverfahren eingesetzt werden.

In der Einheit zur MIMO-Ansteuerung werden im Wesentlichen die hochfrequenten elektrischen Signale erzeugt, die den einzelnen elektrischen Anschlüssen der Koppelvorrichtung zugeführt werden. Hierzu werden die zu sendenden Daten entsprechend dem verwendeten MIMO-Übertragungsverfahren auf die einzelnen hochfrequenten elektrischen Signale verteilt und auf die hochfrequenten elektrischen Signale moduliert. Den einzelnen elektrischen Anschlüssen der Koppelvorrichtung können jeweils hochfrequente elektrische Signale mit jeweils unterschiedlichen Daten über die Einheit zur MIMO-Ansteuerung zugeführt werden. Alternativ ist es auch möglich den einzelnen elektrischen Anschlüssen der Koppelvorrichtung jeweils eine identische oder unterschiedliche Linearkombination von hochfrequenten Einzelsignalen mit allen Daten zuzuführen. In einer selteneren Applikation kann den einzelnen elektrischen Anschlüssen der Koppelvorrichtung jeweils auch ein identisches hochfrequentes elektrisches Signal mit jeweils identischen Daten zugeführt werden.

Die Koppelvorrichtung kann in einer ersten Variante nach dem Prinzip eines Richtkopplers ausgebildet sein. Die zur einzelnen Sende-Empfangs-Einheit jeweils gehörige Koppelvorrichtung umfasst einen ersten elektrischen Leiter des Richtkopplers, während der elektrische Leiter innerhalb der Schiene, einen zweiten elektrischen Leiter des Richtkopplers bildet. Die Koppelvorrichtung und der zugehörige elektrische Leiter in der dielektrischen Schiene sind somit die beiden Koppelpartner des Richtkopplers.

Zur Realisierung einer 2×2-MIMO-Struktur umfasst die Koppelvorrichtung folglich ein Koppelelement, das mit zwei elektrischen Anschlüssen zur elektrischen Anbindung an die Sende-Empfangs-Einheit verbunden ist. Über diese beiden elektrischen Anschlüsse werden jeweils elektrische Signale von einer Einheit zur MIMO-Ansteuerung der Sende-Empfangs-Einheit in die Koppelvorrichtung eingespeist oder aus der Koppelvorrichtung in eine Einheit zur MIMO-Entzerrung der Sende-Empfangs-Einheit ausgespeist.

Um einen hohen Koppelfaktor und gleichzeitig eine hohe Reflexionsdämpfung zum elektrischen Leiter in der Schiene zu verwirklichen, ist das Koppelelement der Koppelvorrichtung geeignet zum elektrischen Leiter in der Schiene zu positionieren und geeignet zu dimensionieren.

Um eine Kopplung mit einem hohen Koppelfaktor zu erzielen, kann die Koppelvorrichtung ohne Ausbildung einer Ausnehmung direkt an der dielektrischen Schiene positioniert sein. Die Außenleiterbeschichtung ist hierzu bevorzugt im Bereich der Koppelvorrichtung freigelegt. Die Koppelvorrichtung ragt bevorzugt aber in eine Ausnehmung hinein, die in der dielektrischen Schiene ausgebildet ist, um den Koppelfaktor der elektromagnetischen Welle innerhalb des Wellenleiters zu erhöhen.

Da nur ein sehr kleiner Teil der in Längsachsrichtung der Schiene transmittierten Leistung der elektromagnetische Welle über die Koppelvorrichtung zur Sende-Empfangs-Einheit ausgekoppelt wird, weist die Transmissionsdämpfung des schienenbasierten Datenübertragungssystems im Bereich der auskoppelnden Koppelvorrichtung nur einen vergleichsweise kleinen Einbruch auf. Weiter erzeugt die geeignet schwach zu dimensionierende Ankopplung der Koppelvorrichtung an die auf der Schiene übertragene elektromagnetische Welle nur schwache Reflexionen, so dass auch im Fall der Montage mehrerer Koppelvorrichtungen entlang der Schiene die Signalübertragung nur im geringem Maß beeinträchtigt wird.

Die Koppelvorrichtung umfasst ferner eine Außenleiterkopplung zwischen der Außenleiter-Beschichtung der Schiene und einem Bezugspotential-Anschluss der jeweiligen Sende-Empfangs-Einheit. Diese Außenleiter-Kopplung kann bevorzugt durch eine galvanische Kopplung, beispielsweise durch eine metallische Umhüllung der Koppelelemente der Koppelvorrichtung, oder alternativ durch eine kapazitive Kopplung erfolgen.

In einer zweiten Variante kann die Koppelvorrichtung auch Koppelelemente für ein elektrisches Feld, d. h. E-Feld-Koppelelemente, und/oder Koppelelemente für ein Magnetfeld, d. h. H-Feld-Koppelelemente enthalten. Ein E-Feld-Koppelelement ist bevorzugt als kleine Stabantenne oder als kleine Dipolantenne realisiert, während ein H-Feld-Koppelelement bevorzugt als kleine Schleifenantennen ausgebildet ist. Das E-Feld-Koppelelement weist einen elektrischen Anschluss auf, der zum Ein- oder Ausspeisen eines elektrischen Signals mit der Sende-Empfangs-Einheit elektrisch verbunden ist. Das H-Feld-Koppelelement weist einen elektrischen Anschluss auf, der zum Ein- oder Ausspeisen eines elektrischen Signals mit der Sende-Empfangs-Einheit elektrisch verbunden ist. Der andere elektrische Anschluss des H-Feld-Koppelelements ist mit dem Masseanschluss der Sende-Empfangs-Einheit und/oder mit der Außenleiterbeschichtung der dielektrischen Schiene verbunden und dient nicht zum Ein- oder Ausspeisen eines elektrischen Signals mit der Sende-Empfangs-Einheit. Somit sind sowohl das E-Feld-Koppelelement als auch das H-Feld-Koppelelement bidirektional zum Einspeisen / Senden und zum Ausspeisen / Empfangen einer elektromagnetischen Welle im Nahfeld ausgebildet.

Für eine 2×2-MIMO-Struktur sind entweder zwei E-Feld-Koppelelemente oder zwei H-Feld-Koppelelemente erforderlich. Auch die Kombination eines E-Feld-Koppelelements und eines H-Feld-Koppelelements ist für eine Koppelvorrichtung in einer 2×2-MIMO-Struktur denkbar. Die E- und/oder H-Koppelelemente sind hierbei in einem durch die Wellenmechanik vorbestimmten Längsabstand entlang der elektrischen Leitung zueinander anzuordnen. Für einen höheren Rang der MIMO-Struktur ist die Anzahl von E-Feld-Koppelelementen und/oder H-Feld-Koppelelementen entsprechend zu erhöhen.

Die einzelnen E-Feld- bzw. H-Feld-Koppelelemente sind ebenfalls im Hinblick auf einen hohen Koppelfaktor und gleichzeitig auf eine hohe Reflexionsdämpfung entsprechend zu dimensionieren und entsprechend in einer Ausnehmung innerhalb der dielektrischen Schiene anzuordnen. Hinsichtlich der Außenleiterkopplung gilt das zur Koppler-Vorrichtung nach dem Richtkoppler-Prinzip obig Gesagte äquivalent.

Die von der Einheit zur MIMO-Ansteuerung in die elektrischen Anschlüsse der E-Feld-Koppelelemente oder H-Feld-Koppelelemente eingespeisten hochfrequenten elektrischen Signale werden jeweils in elektromagnetische Wellen im schienenbasierten Datenübertragungskanal eingekoppelt, die sich in beide Längsachsrichtungen der Schiene ausbreiten. Die von den E-Feld-Koppelelementen oder den H-Feld-Koppelelementen jeweils ausgekoppelten elektromagnetischen Wellen, die sich aus einer Überlagerung von interferierenden Reflexionen der einzelnen elektromagnetischen Wellen ergeben, werden als korrespondierende hochfrequente elektrischen Signale der Einheit zur MIMO-Entzerrung zugeführt. In der Einheit zur MIMO-Entzerrung erfolgen die Entzerrung und die Rekonstruktion der beiden hochfrequenten elektrischen Signale, die von einer anderen Sende-Empfangs-Einheit gesendet werden.

Um die Entzerrungsqualität in der MIMO-Entzerrung noch weiter zu verbessern, wird vorteilhaft Beamforming (deutsch: Strahlformung) genutzt. Hierzu sendet die einzelne Sende-Empfangs-Einheit in den beiden Längsachsrichtungen der Schiene jeweils unterschiedliche HF-Signale:
Für eine Koppelvorrichtung, die nach dem Richtkoppler-Prinzip arbeitet, ist hierzu im Sendebetrieb von der Einheit zur MIMO-Ansteuerung der Sende-Empfangs-Einheit in die beiden elektrischen Anschlüsse des Koppelelements jeweils ein unterschiedliches hochfrequentes elektrisches Signal, d. h. jeweils ein hochfrequentes elektrisches Signal, auf das unterschiedliche Daten moduliert sind, einzuspeisen. Die beiden HF-Signale mit jeweils unterschiedlichen Daten werden aufgrund der Richtwirkung der Koppelvorrichtung jeweils in eine hochfrequente elektromagnetische Welle ausgestrahlt, die sich jeweils in eine unterschiedliche Längsachsrichtung der Schiene ausbreitet. Im Empfangsbetrieb werden an den beiden elektrischen Anschlüssen des Koppelelements durch die Richtwirkung der Koppelvorrichtung jeweils die aus den beiden Längsachsrichtungen des Schienensystems sich ausbreitenden elektromagnetischen Wellen jeweils getrennt ausgekoppelt und somit getrennt der Einheit zur MIMO-Entzerrung der Sende-Empfangs-Einheit zugeführt.

Zur Einkopplung von elektromagnetischen Wellen mit unterschiedlichen Dateninhalten in den beiden Längsachsrichtungen der Schiene sind in einer Koppelvorrichtung mit E-Feld-Koppelelementen zwei E-Feld-Koppelelemente erforderlich. Die beiden E-Feld-Koppelelementen sind in einem axialen Abstand von λ/4·(2n+1), bevorzugt λ/4, entlang der Längsachse der Schiene zueinander beabstandet. Hierbei ist λ die Wellenlänge der im Datenübertragungskanal sich ausbreitenden elektromagnetischen Welle und n ist ein ganzzahliger nichtnegativer Faktor. Die Einheit zur MIMO-Ansteuerung ist eingerichtet, in den elektrischen Anschluss der beiden E-Feld-Koppelelemente jeweils ein erstes elektrisches Signal und ein zweites elektrisches Signal einzuprägen. Das an dem einen E-Feld-Koppelelement eingeprägte erste elektrische Signal ist gegenüber dem an dem anderen Koppelelement eingeprägten ersten elektrischen Signal um 90° phasenverzögert und das an dem anderen E-Feld-Koppelelement eingeprägte zweite elektrische Signal ist gegenüber dem an dem einen E-Feld-Koppelelement eingeprägten zweiten elektrischen Signal um 90° phasenverzögert.

Beim Auskoppeln von zwei hochfrequenten elektromagnetischen Wellen mit jeweils unterschiedlichen Daten, die sich in unterschiedlichen Längsachsrichtungen der Schiene ausbreiten, können die beiden E-Feld-Koppelelemente mit jeweils einem elektrischen Anschluss der Koppelvorrichtung verwendet werden, die bereits zum Einkoppeln von elektromagnetischen Wellen mit unterschiedlichen Dateninhalten in den beiden Längsachsrichtungen zum Einsatz kommen. Die elektrischen Anschlüsse der beiden E-Feld-Koppelelemente sind mit einer Einheit zur MIMO-Entzerrung der Sende-Empfangs-Einheit verbunden. Die Einheit zur MIMO-Entzerrung ist eingerichtet, mittels eines MIMO-Entzerrungsverfahrens aus den an den elektrischen Anschlüssen der beiden E-Feld-Koppelelemente jeweils ausgespeisten elektrischen Signalen die beiden von einer anderen Sende-Empfangs-Einheit in die zugehörige Koppelvorrichtung jeweils eingekoppelten elektrischen Signale zu rekonstruieren.

Werden in der Koppelvorrichtung anstelle von zwei E-Feld-Koppelelementen zwei H-Feld-Koppelelemente verwendet, so ist die Vorgehensweise zum Senden bzw. Empfangen von zwei unterschiedlichen HF-Signalen in den beiden Längsachsrichtungen der Schiene äquivalent wie bei zwei E-Feld-Koppelelementen.

Schließlich ist auch eine Koppelvorrichtung mit einem E-Feld-Koppelelement und einem H-Feld-Koppelelement möglich.

Um elektromagnetische Wellen mit unterschiedlichen Daten in unterschiedliche Längsachsrichtungen der Schiene einzuspeisen oder aus unterschiedlichen Längsachsrichtungen der Schiene auszuspeisen, sind ein E-Feld-Koppelelement und ein H-Feld-Koppelelement erforderlich. Die elektrischen Anschlüsse des E-Feld-Koppelelements und des H-Feld-Koppelelements, in die von der Sende-Empfangs-Einheit jeweils ein elektrisches Signal eingespeist oder ausgespeist wird, sind in einem axialen Abstand von n·λ/2, bevorzugt λ/2, entlang der Längsachse der Schiene beabstandet, da das E-Feld und das H-Feld einen Phasenversatz von 90° zueinander aufweisen (n ist hierbei ein ganzzahliger nichtnegativer Faktor einschließlich Null).

Generell ist die Übertragungsfrequenz bzw. der Übertragungsfrequenzbereich und damit die Wellenlänge bzw. der Wellenlängenbereich der sich im schienenbasierten Übertragungssystem ausbreitenden elektromagnetischen Welle derart hoch zu wählen, dass die durch die λ/4- bzw. die λ/2-Beabstandung der einzelnen Koppelelemente bedingte räumliche Ausdehnung der Koppelvorrichtung eine kompakte Größe erreicht.

Ein von einer Mehrzahl von Teilnehmern genutzter schienenbasierter Datenübertragungskanal scheidet für eine direkte Kommunikation zwischen zwei Sende-Empfangs-Einheiten - sogenannte peer-to-peer-Kommunikation - aus, da ein derartiger Datenübertragungskanal von mehreren sendebereiten Sende-Empfangs-Einheiten nicht gleichzeitig genutzt werden kann. Vielmehr ist der Zugriff jeder einzelnen Sende-Empfangs-Einheit auf das gemeinsame Übertragungsmedium zu organisieren. Die Datenübertragung im schienenbasierten Datenübertragungskanal ist bevorzugt nach dem Master-Slave-Prinzip zu verwirklichen.

Eine Sende-Empfangs-Einheit ist als Master-Einheit ausgebildet, während die übrigen Sende-Empfangs-Einheiten jeweils als Slave-Einheiten ausgebildet sind. Die Master-Einheit ist bevorzugt auch als Zugangspunkt (englisch: Access-Point) ausgebildet. Sie weist also eine Datenschnittstelle zu einem weiteren Datenübertragungssystem, bevorzugt einem festverdrahteten Datennetz, innerhalb des Gebäudes auf. Die Datenschnittstelle ist bevorzugt galvanisch bzw. drahtgebunden, alternativ auch drahtlos, mit dem weiteren Datenübertragungssystem verbunden. Der Zugangspunkt kann bevorzugt eine sowieso erforderliche Stromversorgungsschnittstelle zwischen der Master-Einheit bzw. der Slave-Einheiten und einer Stromversorgung im Gebäude enthalten.

Die Abfrage nach Übertragungskapazität und die Zuweisung von Übertragungskapazität erfolgt durch die Master-Einheit. Dies erfolgt über gängige Verfahren, die typischerweise in den einzelnen Übertragungsstandards wie beispielsweise IEEE 802.11 festgelegt sind. Die sendebereiten Slave-Einheiten können in einzelnen Zeitschlitzen, die ihnen von der Master-Einheit zugewiesen wird, die zu sendenden Daten an die zu empfangende Sende-Empfangs-Einheit übertragen (sogenanntes Time-Division-Multiple-Access(TDMA)-Verfahren; deutsch: Zeitmultiplex-Verfahren). Alternativ zum Zeitmultiplex-Verfahren ist auch ein Frequenzmultiplex-Verfahren (Frequency-Division-Multiple-Access(FDMA)-Verfahren) oder ein Codemultiplex-Verfahren(Code-Division-Multiple-Access(CDMA)-Verfahren) anwendbar. Ein Sonderfall eines Frequenzmultiplex-Verfahren stellt das sogenannte OFDM-Verfahren (Orthogonal-Frequency-Division-Multiplex) dar.

Die Datenübertragung erfolgt bevorzugt von der sendenden Slave-Einheit zur Master-Einheit und anschließend von der Master-Einheit zur empfangenden Slave-Einheit. Auch ein Multicast-Betrieb ist denkbar, in dem eine zu sendende Slave-Einheit über die Master-Einheit mit mehreren empfangenden Slave-Einheiten oder mit alle übrigen empfangenden Slave-Einheiten eine Datenkommunikation führt.

Die Festlegung, welche Sende-Empfangs-Einheit als Master-Einheit agiert und welche Sende-Empfangs-Einheiten somit als Slave-Einheiten agieren, kann bevorzugt einmalig am Betriebsbeginn festgelegt werden. Bevorzugt wird die Sende-Empfangs-Einheit, die eine Stromversorgungsschnittstelle zum Energieversorgungsnetz des Gebäudes aufweist, als Master-Einheit agieren. Denkbar ist auch in Analogie zu einem ad-hoc-Netzwerk, dass die einzelnen Sende-Empfangs-Einheiten in einem bestimmten längeren Zeitraster über ein bestimmtes Verfahren untereinander ermitteln, welche Sende-Empfangs-Einheit als Master-Einheit agiert und welche Sende-Empfangs-Einheiten somit als Slave-Einheiten agieren. Letztere Variante ist insbesondere bei einem schienenbasierten Datenübertragungskanal mit zeitlich wechselnden Sende-Empfangs-Einheiten geeignet.

Bei einer Vorabfestlegung der Master-Einheit ist die als Master-Einheit ausgebildete Sende-Empfangs-Einheit bevorzugt in der geometrischen Mitte oder in einem axialen Umgebungsbereich der geometrischen Mitte entlang der Längserstreckung der Schiene zu positionieren. In diesem Fall entspricht die Anzahl der Sende-Empfangs-Einheiten, die in der einen Längsachsrichtung der Schiene von der Master-Einheit beabstandet positioniert sind, näherungsweise der Anzahl der Sende-Empfangs-Einheiten, die in der anderen Längsachsrichtung der Schiene von der Master-Einheit beabstandet positioniert sind. Somit ist das zu übertragende Datenvolumen zwischen der Master-Einheit und den beiden Gruppen von Slave-Einheiten, die jeweils in der einen Längsachsrichtung oder in der anderen Längsachsrichtung der Schiene positioniert ist, näherungsweise gleich hoch. Eine derartige Anordnung einer Master-Einheit ist insbesondere für das Beamforming-Verfahren geeignet, da sie eine bestmögliche Ausnutzung der Übertragungskapazität des schienenbasierten Datenübertragungskanals ermöglicht.

Bei einer größeren Längserstreckung des schienenbasierten Datenübertragungssystems weist in einer bevorzugten Erweiterung der Erfindung die elektrische Leitung des Datenübertragungskanals mehrere stirnseitig miteinander verbindbare Schienen aus einem elektrisch isolierenden Material und zugehörige miteinander verbindbare elektrischen Leiter auf. Die dielektrischen Schienen berühren sich hierbei stirnseitig auf Stoß, um einen kontinuierlichen Dielektrizitätsbelag entlang der gesamten elektrischen Leitung zu realisieren und damit eine elektrische Störstelle im Übertragungskanal zu vermeiden bzw. zumindest zu minimieren.

Die axiale Verbindung der einzelnen aufeinanderfolgenden dielektrischen Schienen erfolgt entweder direkt zwischen den beiden zu koppelnden Schienen oder mittels eines zusätzlichen Verbindungselements. Bei einer direkten Kopplung der beiden zu verbindenden Schienen sind die axialen Enden der beiden Schienen derart ausgeformt, dass ein kraftschlüssiges Verbinden, beispielsweise über konisch ausgeformte Profile, ein formschlüssiges Verbinden, beispielsweise über Rastelement-Paare, ein stoffschlüssiges Verbinden, beispielsweise über Kleben, oder eine Schraubverbindung möglich ist. Ein indirektes Verbinden über ein zusätzliches Verbindungsmittel ist beispielsweise über ein Klemmelement möglich, das kraftschlüssig in zugehörigen Ausnehmungen an den axialen Enden der benachbarten Schienen eingeklemmt wird. Außenseitig können zwei benachbarten Schienen über eine Manschette miteinander verbunden werden, die entweder kraftschlüssig oder formschlüssig oder über eine Schraubverbindung mit den beiden Schienen verbindbar ist.

Die elektrische Verbindung der Außenleiterbeschichtung von zwei benachbarten dielektrischen Schienen kann bevorzugt durch die bereits obig erwähnte Manschette verwirklicht werden. Die Kopplung zwischen der metallisch ausgebildeten Manschette und der Außenleiterbeschichtung der beiden miteinander zu verbindenden Schienen ist bevorzugt jeweils als λ/4-Resonator ausgebildet. Hierzu entspricht die Längserstreckung der metallischen Manschette in den angrenzenden Bereichen der miteinander zu verbindenden Schienen jeweils einem Viertel der Wellenlänge der sich im Wellenleiter ausbreitenden elektromagnetischen Welle. Außerdem ist zwischen der metallischen Manschette und der metallischen Außenleiterbeschichtung im Bereich der λ/4-Überlappung eine dielektrische Beschichtung auf der metallischen Außenleiter-beschichtung der einzelnen Schienen aufgebracht. Mit einer als λ/4-Resonator ausgeformten Manschette lässt sich die Transmissionsdämpfung im Übergang zwischen zwei benachbarten Schienen für die Übertragung einer hochfrequenten elektromagnetischen Welle innerhalb der vorbestimmten Bandbreite verbessern. Maßgeblicher Parameter ist hierbei die elektrische Länge der Manschette.

Für die elektrische Verbindung der einzelnen als Innenleiter dienenden elektrischen Leiter kann bevorzugt ein Verbindungselement mit einer der Anzahl von Innenleitern entsprechenden Anzahl von elektrischen Kontaktelementen verwendet werden. Für die Positionierung des Verbindungselements innerhalb der dielektrischen Schiene ist an den axialen Enden der Schienen jeweils eine entsprechend ausgeformte Ausnehmung ausgebildet. Die Ausnehmung ist bevorzugt derart ausgebildet, dass das Verbindungselement vollständig im dielektrischen Bereich der Schiene verschwindet. Die einzelnen Kontaktelemente weisen an ihren axialen Enden jeweils eine Kontaktlasche auf, die einen ausreichenden Kontaktdruck auf die axialen Enden der zugehörigen elektrischen Leiter ausübt. Neben einer derartigen galvanischen Verbindung der einzelnen Innenleiter ist alternativ auch eine resonante, galvanisch isolierte Kopplung mittels eines λ/4-Resonators in Anlehnung an die Außenleiterkontaktierung realisierbar.

Die elektrische Verbindung zwischen zwei Schienen kann alternativ auch ohne ein Verbindungselement mit Kontaktelementen verwirklicht werden. In diesem Fall ragen die elektrischen Innenleiter an einem axialen Ende der Schiene über das axiale Ende der Schiene hinaus und sind in diesem Bereich als Kontaktlasche ausgeformt.

In einer bevorzugten Ausprägung der Erfindung kann sich die elektrische Leitung des schienenbasierten Datenübertragungssystems in mindestens zwei elektrische Leitungen verzweigen. Hierbei verzweigt sich die dielektrische Schiene in mindestens zwei dielektrische Schienen und die zugehörigen elektrischen Leiter verzweigen sich jeweils in mindestens zwei elektrische Leiter. Auf diese Weise können nicht nur Endgeräte entlang der linienförmigen Längserstreckung der Schiene an das Datenübertragungssystem angeschlossen werden, sondern auch flächig verteilt angeordnete Endgeräte mit den Datenübertragungssystem verbunden werden.

Bevorzugt kann die Verzweigung T-förmig oder Y-förmig ausgeformt sein. Es sind aber auch andere Ausformungen von Verzweigungen denkbar. Im Hinblick auf eine gute Übertragungscharakteristik für hochfrequente elektromagnetische Wellen sollte der Verzweigungswinkel zwischen den einzelnen Verzweigungsarmen jeweils nicht in einem spitzen Winkel erfolgen. Bevorzugt sollte der Verzweigungswinkel hierbei größer als 45°, besonders bevorzugt größer als 60° und ganz besonders bevorzugt gleich 90° oder größer als 90° sein.

Wie bereits obig erwähnt, können im schienenbasierten Datenübertragungssystem mehrere elektrische Leiter oder mehrere Paare von elektrischen Leitern innerhalb der dielektrischen Schiene angeordnet sein. Damit lassen sich mehrere unabhängige Moden der elektromagnetischen Welle mit jeweils unterschiedlichen Daten im schienenbasierten Datenübertragungssystem übertragen. Zur Ein- und Ausspeisung der jeweils unabhängigen Moden der elektromagnetischen Welle in das Schienensystem weist die Koppelvorrichtung für jeden Innenleiter bzw. für jedes Innenleiter-Paar jeweils separate Koppelelemente auf, die jeweils separate HF-Signale mit der Sende-Empfangs-Einheiten im Sende- und Empfangs-Betrieb austauschen. Um ein Übersprechen zwischen diesen einzelnen Übertragungskanälen innerhalb der dielektrischen Schiene zu minimieren, sind in der dielektrischen Schiene entlang ihrer Längserstreckung bevorzugt metallische Schirmungsbleche zwischen den einzelnen elektrischen Leitern bzw. den einzelnen Paaren von elektrischen Leitern anzuordnen.

Zur Minimierung von Reflexionen an den axialen Enden der Schiene und damit einer reflexionsminimierten Übertragung der hochfrequenten elektromagnetischen Welle entlang der gesamten Längserstreckung der Schiene ist an beiden axialen Enden der Schiene jeweils bevorzugt ein reflexionsarmer Abschlusswiderstand zwischen jedem Innenleiter und dem Außenleiter geschaltet. Im Idealfall von fehlenden Reflexionen ist eine reflexionsfreie Impedanz, d. h. eine angepasste Impedanz, zwischen jedem Innenleiter und dem Außenleiter geschaltet. Die angepasste Impedanz entspricht der single-ended Systemimpedanz des jeweiligen Innenleiters und beträgt beispielsweise 50 Ω.

Sind innerhalb der dielektrischen Schiene zwei benachbarte elektrische Leiter zur Übertragung eines differentiellen Signals geführt, so ist zwischen diesen beiden elektrischen Leitern eine angepasste Impedanz zu schalten, die der doppelten single-ended Systemimpedanz, beispielsweise 100 Ω, entspricht. Alternativ kann bei einem Paar von elektrischen Leitern zur Übertragung eines differentiellen Signals zwischen jedem elektrischen Leiter und der Außenleiterbeschichtung der dielektrischen Schiene eine angepasste Impedanz geschaltet sein, die der single-ended Systemimpedanz, beispielsweise 50 Ω, entspricht.

Die Realisierung der Abschlusswiderstände kann jeweils über ein geeignet geformtes metallisches Verbindungselement, beispielsweise eine Hülse oder ein Steg, erfolgen. Die Verwendung von diskreten elektrischen Bauelementen wie beispielsweise SMD-Widerstande ist ebenfalls möglich.

Sind Reflexionen der hochfrequenten elektromagnetischen Welle an den axialen Enden der Schiene akzeptiert, da in den einzelnen Sende-Empfangs-Einheiten eine MIMO-Entzerrung implementiert ist, können alternativ die axialen Enden der Innenleiter und des Au-ßenleiters jeweils über eine Kurzschlussverbindung resp. über eine nicht angepasste Impedanz verbunden sein. Im Fall einer dielektrischen Schiene mit Außenleiterbeschichtung und ohne Innenleiter können die axialen Stirnflächen der Schiene auch metallisch beschichtet sein. Die axialen Enden der elektrischen Leiter können bei Billigung von Reflexionen alternativ jeweils unbeschaltet sein, d. h. offen sein. An den axialen Enden der elektrischen Leiter kann auch eine Totalreflexion - mittels eines Kurzschlusses oder mittels einer offenen Beschaltung - angestrebt werden, um die Signalleitung des Übertragungssignals an den Abschlusswiderständen der Schiene nicht zu vermindern und eine ungünstige Erwärmung der Schienenenden zu vermeiden.

Für die Datenübertragung im Datenübertragungskanal können gängige Funkkommunikationsstandards, wie beispielsweise Bluetooth oder IEEE 802.11 (WIFI), oder gängige Leitungsstandards, wie beispielsweise DOCSIS (Data over Cable Services Interface Specification; deutsch: Schnittstellen-Spezifikation für Datendienste über Kabel), eingesetzt werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine isometrische Darstellung eines erfindungsgemäßen Datenübertragungssystems,
- Fig. 2A: eine Querschnittsdarstellung einer ersten Ausprägung des Übertragungskanals im erfindungsgemäßen Datenübertragungssystem,
- Fig. 2B: eine Querschnittsdarstellung einer zweiten Ausprägung des Übertragungskanals im erfindungsgemäßen Datenübertragungssystem,
- Fig. 2C: eine Querschnittsdarstellung einer dritten Ausprägung des Übertragungskanals im erfindungsgemäßen Datenübertragungssystem,
- Fig. 2D: eine Querschnittsdarstellung einer vierten Ausprägung des Übertragungskanals im erfindungsgemäßen Datenübertragungssystem,
- Fig. 2E: eine Querschnittsdarstellung einer bevorzugten Modifikation des Übertragungskanals im erfindungsgemäßen Datenübertragungssystem,
- Fig. 2F: eine Querschnittsdarstellung einer weiteren Modifikation des Übertragungskanals im erfindungsgemäßen Datenübertragungssystem,
- Fig. 2G: eine Querschnittsdarstellung von mehreren Übertragungskanälen im erfindungsgemäßen Datenübertragungssystem,
- Fig. 3A: eine Darstellung einer Koppelvorrichtung nach dem Richtkopplerprinzip und einer zugehörigen Sende-Empfangs-Einheit,
- Fig. 3B: eine Darstellung einer Koppelvorrichtung mit zwei E-Feld-Koppelelementen und einer zugehörigen Sende-Empfangs-Einheit,
- Fig. 3C: eine Darstellung einer Koppelvorrichtung mit zwei H-Feld-Koppelelement und einer zugehörigen Sende-Empfangs-Einheit,
- Fig. 3D: eine Darstellung einer Koppelvorrichtung mit einem E-Feld-Koppelelement und einem H-Feld-Koppelelement und einer zugehörigen Sende-Empfangs-Einheit,
- Fig. 3E: eine Darstellung einer Koppelvorrichtung mit galvanischen Koppelelementen und einer zugehörigen Sende-Empfangs-Einheit,
- Fig. 4A: eine Längsschnittdarstellung mit Abschlussimpedanz bei einem asymmetrischen Übertragungskanal,
- Fig. 4B: eine Längsschnittdarstellung mit Abschlussimpedanz bei einem symmetrischen Übertragungskanal im Gegentaktmode,
- Fig. 4C: eine Längsschnittdarstellung mit Abschlussimpedanz bei einem symmetrischen Übertragungskanal im Gleichtaktmode,
- Fig. 5A: eine isometrische Darstellung einer stirnseitig verbindbaren Schiene im nicht verbundenen Zustand,
- Fig. 5B: eine isometrische Darstellung von zwei stirnseitig miteinander verbundenen Schienen,
- Fig. 5C: einen Ausschnitt einer Längsschnittdarstellung einer Außenleiterverbindung bei zwei stirnseitig miteinander verbundenen Schienen und
- Fig. 6: eine isometrische Darstellung einer Verzweigung in einem schienenbasierten Datenübertragungssystem.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Im Folgenden werden die Figuren zusammenhängend und übergreifend beschrieben.

### BESCHREIBUNG VON AUSFÜHRUNGSBEISPIELEN

Im Folgenden wird das erfindungsgemäße Datenübertragungssystem anhand der einzelnen Figuren im Detail erläutert.

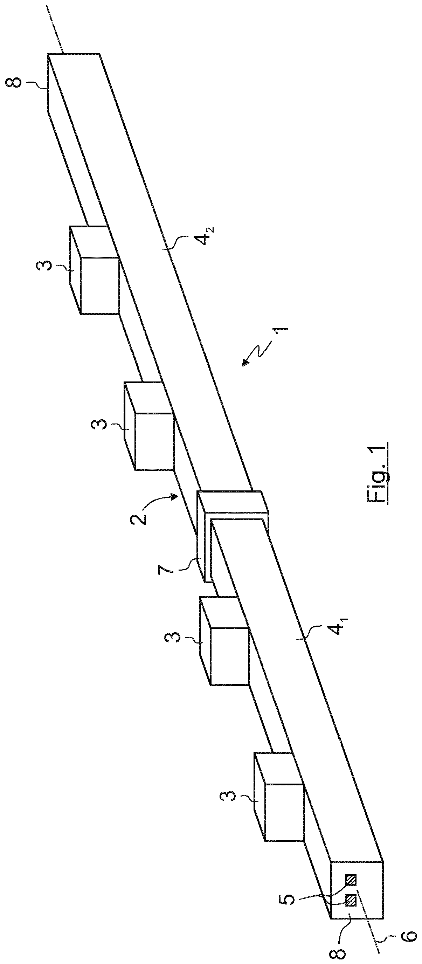

Das Datenübertragungssystem 1 gemäß Fig. 1 weist einen Datenübertragungskanal 2 und mehrere Sende-Empfangs-Einheiten 3 auf, die entlang der Längserstreckung des Datenübertragungskanals 2 angeordnet sind. Der Datenübertragungskanal 2 ist ein elektrischer Datenübertragungskanal und enthält folglich eine elektrische Leitung. Diese elektrische Leitung weist eine dielektrische Schiene 4 und wenigstens einen elektrischen Leiter 5 auf, der jeweils entlang der Längserstreckung der dielektrischen Schiene 4 verläuft und mit der dielektrischen Schiene 4 verbunden ist. Die dielektrische Schiene 4 ist aus einem starren dielektrischen Material hergestellt und weist eine Längserstreckung entlang ihrer Längsachse 6 auf, die ein Vielfaches ihrer Quererstreckung ist. Das schienenbasierte Datenübertragungssystems 1 kann eine einzige Schiene 4 mit zugehörigen elektrischen Leitern 5 oder mehreren stirnseitig miteinander elektrisch und mechanisch verbundenen Schienen 4 mit zugehörigen elektrischen Leitern 5 umfassen. In Fig. 1 ist ein schienenbasiertes Datenübertragungssystem 1 mit zwei dielektrischen Schienen 4₁ und 4₂ dargestellt, die stirnseitig über eine Manschette 7 miteinander verbunden sind.

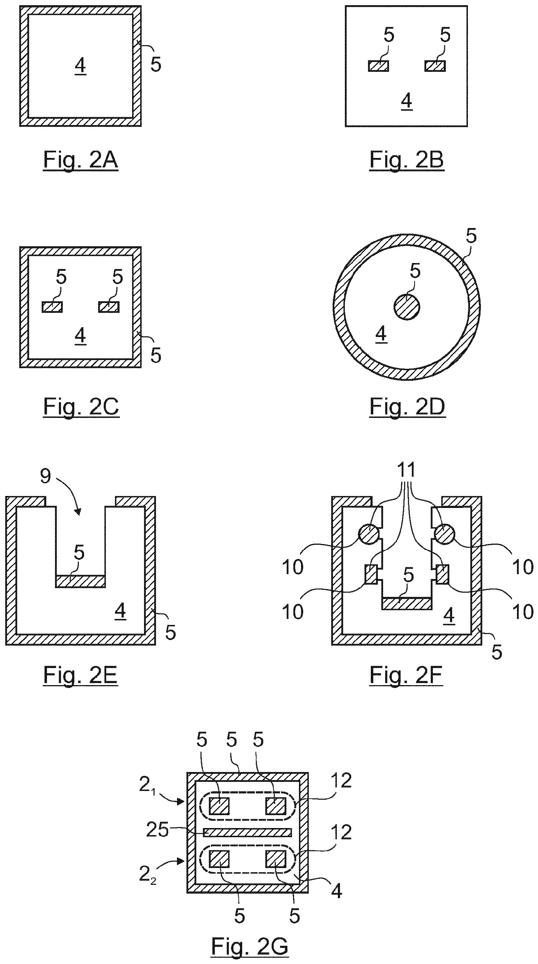

Der elektrische Datenübertragungskanal 2 kann in mehreren Ausprägungen ausgebildet sein, wie beispielhaft in den Figuren 2A bis 2G dargestellt ist.

Eine erste Ausprägung des elektrischen Datenübertragungskanals 2 gemäß Fig. 2A umfasst lediglich eine dielektrische Schiene 4 und einen einzigen elektrischen Leiter 5, der als metallische Beschichtung mantelflächenseitig auf der Außenoberfläche der dielektrischen Schiene 4 ausgebildet ist. Die metallische Beschichtung ist auf der gesamten Mantelfläche der dielektrischen Schiene 4 mit Ausnahme der Bereiche aufgebracht, in denen die einzelnen Sende-Empfangs-Einheiten 3 an der Schiene 4 angeordnet sind. Das Querschnittsprofil der Schiene ist bevorzugt quadratisch. Denkbar sind aber auch andere technisch sinnvolle Querschnittsprofile. In einem solchen Datenübertragungskanal 2 kann sich eine elektromagnetische Welle innerhalb der dielektrischen Schiene 4 zwischen der metallischen Beschichtung entlang der Längsachse 6 der Schiene 4 ausbreiten. Die elektromagnetische Welle, die von einer Sende-Empfangs-Einheit 3 in den elektrischen Datenübertragungskanal 2 eingekoppelt wird, bewegt sich im einfachsten Fall in beide Längsachsrichtungen der Schiene 4. Der schienenbasierte Datenübertragungskanal 2 weist einen homogenen Wellenwiderstand über seine gesamte Längserstreckung auf.

An den axialen Enden 8 der Schiene 4 kann es zu einer Reflexion der elektromagnetischen Welle kommen, falls diese axialen Enden 8 des elektrischen Datenübertragungskanals 2 nicht mit einem angepassten Abschlusswiderstand abgeschlossen sind, der dem Wellenwiderstand des elektrischen Datenübertragungskanals 2 entspricht. Falls die axialen Enden 8 des elektrischen Datenübertragungskanals 2 nicht angepasst abgeschlossen sind, kommt es jeweils zu einer Reflexion der elektromagnetischen Welle und damit zu Interferenzen der reflektierten Wellen zwischen der sendenden Sende-Empfangs-Einheit 3 und der empfangenden Sende-Empfangs-Einheit 3. Die Interferenzen zwischen den einzelnen reflektierten elektromagnetischen Wellen können zu Fading- und Verzerrungs-Effekten ähnlich wie in einem mobilen Mehrwegeübertragungskanal betrachtet werden. Über eine MIMO-Entzerrung können, wie weiter unten noch erläutert wird, die im hochfrequenten Empfangssignal enthaltenen Fading- und Verzerrungseffekte, die aus den Interferenzen der einzelnen reflektierten elektromagnetischen Wellen hervorgehen, entzerrt werden.

In einer zweiten Ausprägung des elektrischen Datenübertragungskanals 2 gemäß Fig. 2B sind zwei elektrische Leiter 5 innerhalb der dielektrischen Schiene 4 voneinander beabstandet angeordnet. Die beiden elektrischen Leiter 5 verlaufen parallel zur Längsachse 6 der dielektrischen Schiene 4. Die beiden elektrischen Leiter 5 weisen in Fig. 2B ein rechteckförmiges Querschnittsprofil auf. Alternativ ist auch ein anderes Profil, beispielsweise ein rundes Profil, möglich. Zwischen den beiden elektrischen Leitern 5 kann sich eine elektromagnetische Welle im Gegentakt-Mode entlang der Längsachse 6 der Schiene 4 ausbreiten. Somit kann in einem solchen elektrischen Datenübertragungskanal 2 ein differentielles HF-Signal, d. h. ein symmetrisches HF-Signal, übertragen werden, das zur hochfrequenten elektromagnetischen Welle im Gegentakt-Mode korrespondiert.

Die dritte Ausprägung des elektrischen Datenübertragungskanals 2 gemäß Fig. 2C weist zusätzlich zu den beiden elektrischen Leitern 5, die innerhalb der dielektrischen Schiene 4 zueinander beabstandet angeordnet sind, einen weiteren elektrischen Leiter 5 auf, der als metallische Beschichtung auf der mantelflächenseitigen Außenoberfläche der dielektrischen Schiene 4 ausgebildet ist. Die beiden innerhalb der dielektrischen Schiene 4 angeordneten elektrischen Leiter 5 bilden die Innenleiter und die metallische Beschichtung den Außenleiter des elektrischen Datenübertragungskanals 2. In der dritten Ausprägung des elektrischen Datenübertragungskanals 2 kann im Vergleich zur zweiten Ausprägung aufgrund des Außenleiters ein höherfrequentes HF-Signal übertragen werden.

In einer vierten Ausprägung des elektrischen Datenübertragungskanals 2 gemäß Fig. 2D liegt eine koaxiale Struktur vor. Hierzu ist im Zentrum einer dielektrischen Schiene 4 mit einem runden Querschnittsprofil ein elektrischer Leiter 5 angeordnet und ist an der mantelflächigen Außenoberfläche der dielektrischen Schiene 4 eine metallische Beschichtung aufgebracht. In einem derartig ausgebildeten elektrischen Datenübertragungskanal 2 kann eine hochfrequente elektromagnetische Welle übertragen werden, die zu einem asymmetrischen HF-Signal korrespondiert.

In einer besonderen Ausprägung eines elektrischen Datenübertragungskanals 2 gemäß Fig. 2E weist die dielektrische Schiene 4 über ihre gesamte Längserstreckung eine Ausnehmung 9 auf. Diese Ausnehmung 9 ist bevorzugt nutenförmig mit einem rechteckförmigen Querschnittsprofil ausgeformt. Denkbar sind aber auch andere Grundquerschnittsprofile, beispielsweise ein dreiecksförmiges Grundquerschnittsprofil. An einer Wand der Ausnehmung 9, bevorzugt am Boden der Ausnehmung 9, ist ein elektrischer Leiter 5 angeordnet, der an der dielektrischen Schiene 4 fixiert ist. Au-ßerhalb der Ausnehmung 9 ist an die dielektrische Schiene 4 an der mantelflächigen Außenoberfläche eine metallische Beschichtung aufgebracht. Bei geeigneter Dimensionierung der Ausnehmung 9 liegt ein elektrischer Datenübertragungskanal 2 mit einem "quasi-koaxialen" Querschnittsprofil vor, in dem eine hochfrequente elektromagnetische Welle geführt werden kann.

In einer Erweiterung der bevorzugten Ausprägung eines elektrischen Datenübertragungskanals 2 gemäß Fig. 2F sind bevorzugt an den beiden Seitenwänden der Ausnehmung 9 jeweils in Längsachsrichtung der dielektrischen Schiene 4 verlaufende Nuten 10 ausgeformt, in denen weitere elektrische Leiter 11 geführt sind. Die Nuten 10 weisen jeweils ein dem Querschnittsprofil der weiteren elektrischen Leiter 11 entsprechendes Querschnittsprofil auf, beispielsweise ein rundes oder quadratisches Querschnittsprofil. Die weiteren elektrischen Leiter 11 sind bevorzugt kraftschlüssig oder alternativ form- bzw. stoffschlüssig in den zugehörigen Nuten 10 fixiert.

Diese weiteren elektrischen Leiter 11 führen entweder einen Gleich- oder einen einphasigen Wechselstrom zur Stromversorgung der einzelnen Sende-Empfangs-Einheiten oder zusätzlicher elektrischer Komponenten bzw. Aggregate, beispielsweise von Leuchten. In einem Mehrleitersystem ist auch die Übertragung von dreiphasigem Wechselstrom in Anwendungen denkbar, bei denen die Leistungsaufnahme erhöht ist. Die weiteren elektrischen Leiter 11 können auch ein Ansteuersignal zur Ansteuerung der zusätzlichen elektrischen Komponenten bzw. Aggregate übertragen. Denkbar sind auch Stromversorgungsleiter mit überlagerten Datensignalen.

Schließlich ist in Fig. 2G eine Ausprägung eines elektrischen Datenübertragungskanals 2 dargestellt, in dem innerhalb der dielektrischen Schiene 4 zwei Paare 12 von zwei elektrischen Leitern 5 dargestellt sind, die insgesamt vier Moden einer elektromagnetischen Welle, d. h. zwei differentielle HF-Signale mit jeweils unterschiedlichen Daten, übertragen.

Um ein Übersprechen zwischen diesen beiden elektrischen Daten-übertragungskanälen 2₁ und 2₂ zu beseitigen bzw. zumindest zu minimieren, ist in der dielektrischen Schiene 4 zwischen den beiden Paaren 12 von zwei elektrischen Leitern 5 ein metallisches Schirmungsblech 25 entlang der Längserstreckung der Schiene 4 angeordnet.

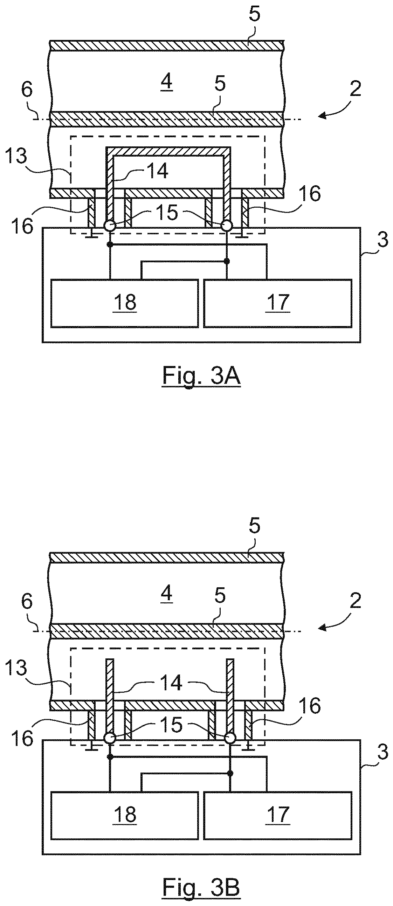

Im Folgenden wird die Ankopplung der einzelnen Sende-Empfangs-Einheiten 3 an den elektrischen Datenübertragungskanal 2 mittels einer Koppelvorrichtung 13 anhand der Figuren 3A bis 3E erläutert.

In einer ersten Variante einer Koppelvorrichtung 13 findet das technische Prinzip eines Richtkopplers Anwendung. Die Koppelvorrichtung 13 bildet hierbei den einen Koppelpartner eines Richtkopplers und weist hierzu als Koppelelement 14 einen ersten elektrischen Leiter eines Richtkopplers auf. Der elektrische Leiter 5, der im Innern der dielektrischen Schiene 4 verläuft, stellt den zweiten elektrischen Leiter des Richtkopplers dar. Bei einem derartigen Leitungskoppler ist der erste elektrische Leiter mit dem zweiten elektrischen Leiter elektromagnetisch gekoppelt.

Eine nach dem Richtkoppler-Prinzip arbeitende Koppelvorrichtung 13 koppelt über eine induktive und kapazitive Kopplung mit dem inneren elektrischen Leiter 5 eine elektromagnetische Welle in den Datenübertragungskanal 2 ein. Äquivalent koppelt die Koppelvorrichtung 13 eine Teilenergie der sich im Datenübertragungskanal 2 ausbreitenden elektromagnetischen Welle aus dem Datenübertragungskanal aus. Aufgrund der Direktivität eines Richtkopplers wird ein hochfrequentes elektrisches Signal, das von der Sende-Empfangs-Einrichtung 3 an einem elektrischen Anschluss 15 der Koppelvorrichtung 13 eingespeist wird, als hochfrequente elektromagnetische Welle eingekoppelt, die sich einzig in einer Längsachsrichtung des schienenbasierten Datenübertragungskanals 2 ausbreitet. Das am anderen elektrischen Anschluss 15 der Koppelvorrichtung 13 eingespeiste hochfrequente elektrische Signal wird aufgrund der Direktivität des Richtkopplers als hochfrequente elektromagnetische Welle eingekoppelt, die sich einzig in der anderen Längsachsrichtung des schienenbasierten Datenübertragungskanals 2 ausbreitet.

Mit dem ersten elektrischen Leiter des Richtkopplers weist die nach dem Richtkoppler-Prinzip arbeitende Koppelvorrichtung 13 ein Koppelelement 14 mit zwei elektrischen Anschlüssen 15 auf. Zur Erzielung eines hohen Koppelfaktors ist das Koppelelement 14 der Koppelvorrichtung 13 durch zwei Durchführungen in der metallischen Außenleiterbeschichtung der dielektrische Schiene 4 in einen in der Schiene 4 ausgebildeten Hohlraum eingeführt und damit möglichst nahe und möglichst parallel zum elektrischen Leiter 5 des Datenübertragungskanals 2 angeordnet.

Die Koppelvorrichtung 13 weist ferner eine Außenleiterkopplung 16 auf, die die metallische Beschichtung auf der dielektrischen Schiene 4 mit einem Bezugspotential, bevorzugt dem Massepotential, der jeweiligen Sende-Empfangs-Einheit 3 elektrisch verbindet. Im Hinblick auf eine gute Schirmwirkung weist die Außenleiterkopplung 16 in einer bevorzugten Ausführungsform zwei metallische Hülsen auf, die jeweils einen der beiden Endabschnitte des Koppelelements 14 mit dem elektrischen Anschluss 15 im Bereich zwischen der Außenleiterbeschichtung der dielektrischen Schiene 4 und dem Gehäuse der Sende-Empfangs-Einheit 3 umhüllen.

Die beiden elektrischen Anschlüsse 15 des Koppelelements 14 sind über die nicht dargestellte Hochfrequenz-Elektronik mit den Funktionseinheiten zur Basisbandsignalverarbeitung der zugehörigen Sende-Empfangs-Einheit 3 elektrisch verbunden. Die beiden Koppelelemente 14 der Koppelvorrichtung 13 bilden eine "Mehrantennenanordnung", an deren elektrischen Anschlüssen 15 jeweils ein zu sendendes HF-Signal oder ein empfangenes HF-Signal anliegen. Die zu den mehreren HF-Signalen jeweils gehörenden Basisbandsignale werden in der MIMO-Basisbandsignalverarbeitung entweder erzeugt (Sendebetrieb) oder weiterverarbeitet (Empfangsbetrieb). Im Empfangsbetrieb werden die empfangenen Signale in einer Einheit zur MIMO-Entzerrung 17 entzerrt, die Teil der Basisbandsignalverarbeitung in der Sende-Empfangs-Einheit 3 ist. Im Sendebetrieb werden die beiden zu sendenden Signale in einer Einheit zur MIMO-Ansteuerung 18 erzeugt, die ebenfalls Teil der Basisbandsignalverarbeitung in der Sende-Empfangs-Einheit 3 ist. Die Separation der Sende- und Empfangssignale kann je nach genutztem Funkübertragungsstandard z.B. im Zeit- oder Frequenzmultiplex erfolgen.

Mit einer Koppelvorrichtung 13 nach dem Richtkoppler-Prinzip ist es möglich, zwei HF-Signale mit jeweils unterschiedlichen Daten in die beiden Koppelelemente 14 einzuspeisen und damit jeweils getrennt und gleichzeitig zwei elektromagnetische Wellen mit jeweils unterschiedlichen Daten in die beiden Längsachsrichtungen der Schiene 4 einzukoppeln. Gleichzeitig ist es mit einer derartigen Koppelvorrichtung 13 möglich, zwei in unterschiedlichen Längsachsrichtungen der Schiene 4 sich jeweils ausbreitende elektromagnetische Wellen getrennt auszukoppeln. Somit ist mit einer derartigen Koppelvorrichtung ein Beamforming möglich.

In einer zweiten Variante einer Koppelvorrichtung 13 gemäß Fig. 3B werden als Koppelelemente 14 zwei E-Feld-Koppelelemente benutzt, die jeweils als kleine Stabantennen oder alternativ als Dipolantennen ausgebildet sind. Derartige E-Feld-Koppelelemente können jeweils durch eine kapazitive Kopplung eine elektromagnetische Welle in den Datenübertragungskanal 2 einkoppeln oder aus dem Datenübertragungskanal 2 auskoppeln.

Auch mit einer derartigen Koppelvorrichtung 13 lassen sich zwei elektromagnetische Wellen in den schienenbasierten Datenübertragungskanal 2 einkoppeln. Aus den beiden elektromagnetischen Wellen, die über die beiden E-Feld-Koppelelemente aus dem schienenbasierten Datenübertragungskanal 2 ausgekoppelt werden und über die beiden elektrischen Anschlüsse 15 als elektrische Signale der Einheit zur MIMO-Entzerrung 17 zugeführt werden, können in der Einheit zur MIMO-Entzerrung 17 die beiden von einer anderen Sende-Empfangs-Einheit 3 jeweils gesendeten elektrischen Signale unter Anwendung eines MIMO-Entzerrungsverfahrens rekonstruiert werden.

Um die Entzerrung und Rekonstruktion der gesendeten elektrischen Signale in der Einheit zur MIMO-Entzerrung 17 zusätzlich zu optimieren, koppelt die Koppelvorrichtung 13 mit zwei E-Feld-Koppelelementen zwei elektromagnetische Wellen mit jeweils unterschiedlichen Daten ein, die sich jeweils in einer einzigen und voneinander unterschiedlichen Richtung im Datenübertragungskanal ausbreiten. Auf diese Weise ist ein Beamforming der beiden eingekoppelten elektromagnetischen Wellen in jeweils eine der beiden Längsachsrichtungen des schienenbasierten Datenübertragungssystems 1 realisiert.

Hierzu sind die beiden E-Feld-Koppelelemente jeweils in einem axialen Abstand von λ/4·(2n+1), bevorzugt λ/4, entlang der Längsachse 6 der Schiene 4 zueinander zu beabstandet. Hierbei sind λ die Wellenlänge der elektromagnetischen Welle und n ein nichtnegativer ganzzahliger Faktor.

Außerdem ist die Einheit zur MIMO-Ansteuerung 18 hierzu eingerichtet, in die elektrischen Anschlüsse 15 der beiden E-Feld-Koppelelemente jeweils ein erstes elektrisches Signal und ein zweites elektrisches Signal einzuprägen. Das an dem einen E-Feld-Koppelelement eingeprägte erste elektrische Signal ist gegenüber dem an dem anderen E-Feld-Koppelelement eingeprägten ersten elektrischen Signal um 90° phasenverzögert und das an dem anderen E-Feld-Koppelelement eingeprägte zweite elektrische Signal ist gegenüber dem an dem einen E-Feld-Koppelelement eingeprägten zweiten elektrischen Signal um 90° phasenverzögert.

Dadurch dass, das erste elektrische Signal an dem einen E-Feld-Koppelelement um 90° phasenversetzt gegenüber dem anderen E-Feld-Koppelement eingespeist wird und der axiale Abstand zwischen dem einen E-Feld-Koppelelement und dem anderen E-Feld-Koppelelement bevorzugt λ/4 entspricht, überlagern sich die zu den ersten elektrischen Signalen jeweils gehörigen elektromagnetischen Wellen an dem einen E-Feld-Koppelelement destruktiv und an dem anderen E-Feld-Koppelelement konstruktiv. Somit breitet sich eine elektromagnetische Welle aus der Einspeisung der beiden ersten elektrischen Signale einzig in einer Längsachsrichtung entlang der Längsachse 6 des Datenübertragungskanals 2 von dem einen E-Feld-Koppelelement zu dem anderen E-Feld-Koppelement aus.

Die Einspeisung der zweiten elektrischen Signale an den beiden E-Feld-Koppelelementen ist umgekehrt zur Einspeisung der beiden ersten elektrischen Signale. Somit überlagern sich die zu den zweiten elektrischen Signalen jeweils gehörigen elektromagnetischen Wellen an dem einen E-Feld-Koppelelement konstruktiv und an dem anderen E-Feld-Koppelelement destruktiv. Somit breitet sich eine elektromagnetische Welle aus der Einspeisung der beiden zweiten elektrischen Signale einzig in einer Längsachsrichtung entlang der Längsachse 6 des Datenübertragungskanals 2 von dem anderen E-Feld-Koppelelement zu dem einen E-Feld-Koppelement aus.

Da die beiden elektromagnetischen Wellen mit den jeweils unterschiedlichen Daten von der Koppelvorrichtung 13 jeweils nur in einer einzigen und jeweils voneinander unterschiedlichen Längsachsrichtung des Datenübertragungskanals 2 ausgestrahlt werden, reduzieren sich die Interferenzen der an den axialen Enden 8 des Datenübertragungskanals 2 reflektierten elektromagnetischen Wellen. Somit ist der Verzerrungsgrad der beiden an den elektrischen Anschlüssen 15 der Koppelvorrichtung 13 jeweils ausgespeisten elektrischen Signale reduziert. Die beiden gesendeten elektrische Signale können damit besser in der Einheit zur MIMO-Entzerrung 17 rekonstruiert werden.

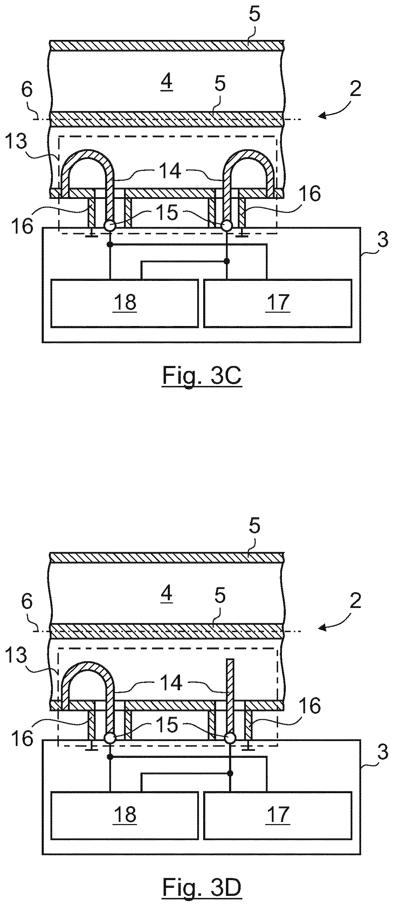

In einer dritten Variante einer Koppelvorrichtung 13 gemäß Fig. 3C werden als Koppelelemente 14 zwei H-Feld-Koppelelemente benutzt, die jeweils als kleine Schleifenantenne ausgebildet sind. Ein derartiges H-Feld-Koppelelement kann durch eine induktive Kopplung eine elektromagnetische Welle in den Datenübertragungskanal 2 einkoppeln oder aus dem Datenübertragungskanal 2 auskoppeln. Das H-Feld-Koppelelement ist über einen einzigen elektrischen Anschluss 15 mit der Sende-Empfangs-Einheit 3 verbunden. Der andere elektrische Anschluss des H-Feld-Koppelelements ist mit der Außenleiterbeschichtung der dielektrischen Schiene 4 und damit über die Außenleiterkopplung 16 mit dem Massepotential der Sende-Empfangs-Einheit 3 elektrisch verbunden. Die axiale Ausdehnung des H-Feld-Koppelelements ist bevorzugt kleiner als λ/4 zu wählen.

Durch das Ein- und Ausspeisen von zwei HF-Signalen an den elektrischen Anschlüssen 15 der beiden H-Feld-Koppelelemente können in Äquivalenz zu zwei E-Feld-Koppelelementen zwei elektromagnetische Wellen in den Datenübertragungskanal 2 eingekoppelt bzw. aus dem Datenübertragungskanal 2 ausgekoppelt werden. Die Signalverarbeitung in der Einheit zur MIMO-Ansteuerung 18 und in der Einheit zur MIMO-Entzerrung 17 ist identisch zu der im Fall einer Koppelvorrichtung 13 mit zwei E-Feld-Koppelelementen.

Für das Beamforming sind ebenfalls zwei H-Feld-Koppelelemente erforderlich. Die beiden elektrischen Anschlüsse 15 jedes H-Feldkoppelelements, die jeweils mit der Einheit zur MIMO-Ansteuerung 18 und der Einheit zur MIMO-Entzerrung 17 verbunden sind, sind ebenfalls in einem axialen Abstand von λ/4·(2n+1), bevorzugt λ/4, entlang der Längsachse 6 der Schiene 4 zueinander zu beabstanden.

Die Einprägung eines ersten elektrischen Signals und eines zweiten elektrischen Signals in die elektrischen Anschlüsse 15 der beiden H-Feld-Koppelelemente beim Beamforming erfolgt identisch wie beim Beamforming im Fall einer Koppelvorrichtung mit zwei E-Feld-Koppelelementen.

Schließlich ist in Fig. 3D eine Koppelvorrichtung mit einem E-Feld-Koppelelement und einem H-Feld-Koppelement dargestellt.

Für das Beamforming sind die elektrische Anschlüsse 15 des E-Feld-Koppelelements und des H-Feld-Koppelelements, die jeweils mit der Einheit zur MIMO-Ansteuerung 18 und mit der Einheit zur MIMO-Entzerrung 17 elektrisch verbunden sind, in einem axialen Abstand von λ/2·n, bevorzugt λ/2, entlang der Längsachse 6 der Schiene 4 zueinander zu beabstanden. λ ist hierbei die Wellenlänge der elektromagnetischen Welle und n ist eine nichtnegative ganze Zahl incl. Null. Das bedeutet, das sich das E- und H-Koppelelement an identischer Stelle befinden dürfen.

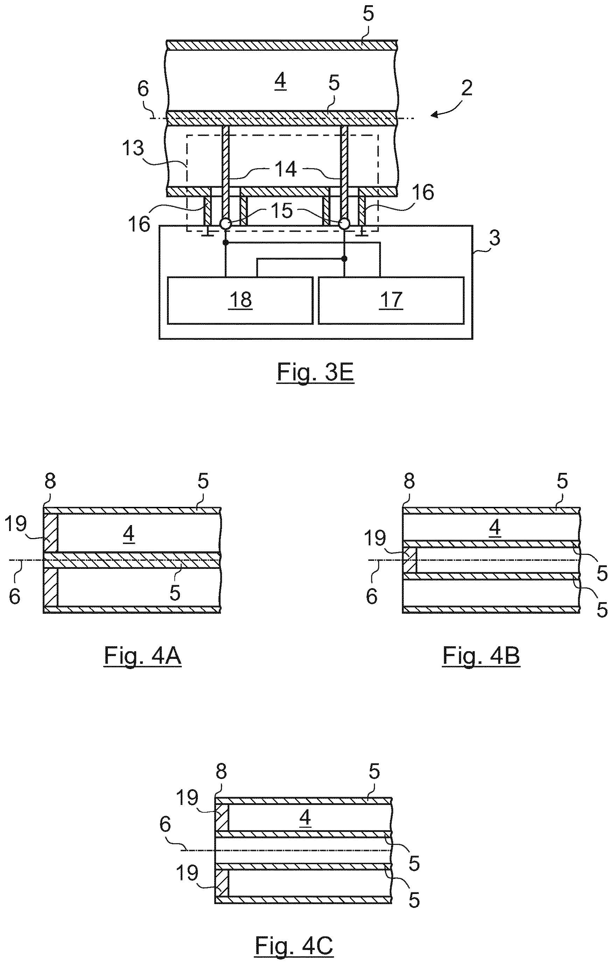

Schließlich geht aus Fig. 3E eine Koppelvorrichtung 13 mit galvanischer Ankopplung hervor. Die beiden Koppelelemente 14 weisen hierzu jeweils einen elektrischen Anschluss 15 zur Ein- oder Ausspeisung eines hochfrequenten elektrischen Signals von bzw. zur Sende-Empfangs-Einheit auf. Die galvanische Kopplung der beiden Koppelelemente 14 mit der elektrischen Leitung des schienenbasierten Datenübertragungssystems 1 erfolgt durch elektrische und mechanische Verbindung der zu den elektrischen Anschlüssen 15 jeweils entgegengesetzten Enden der beiden Koppelelemente 14 mit dem elektrischen Leiter 5 der Schiene 4. Die elektrischen und mechanischen Verbindungen der beiden Koppelelemente 14 mit dem elektrischen Leiter 5 sind in einem axialen Abstand von λ/4·(2n+1), bevorzugt λ/4, entlang der Längsachse 6 der Schiene zueinander beabstandet (n ist hier eine nichtnegative, natürliche Zahl). Eine derartige galvanische Ankopplung ist einzig für eine Sende-Empfangs-Einheit 3 realisierbar, die als Zugangs-Punkt (Access-Point) des schienenbasierten Datenübertragungssystems 1 ausgebildet ist.

Im Folgenden wird die Ausgestaltung der axialen Enden 8 der dielektrischen Schiene 4 anhand der Figuren 4A, 4B und 4C erläutert.

Die axialen Enden 8 des Datenübertragungskanals 2 können mit einem geeignet gewählten Abschlusswiderstand 19 abgeschlossen sein, um eine Reflexion der elektromagnetischen Welle zu minimieren. Im Fall eines asymmetrischen Datenübertragungskanals 2 gemäß Fig. 4A ist dies ein elektrisch leitendes Verbindungselement, beispielsweise eine Hülse, die am axialen Ende 8 zwischen den beiden elektrischen Leitern 5 - dem Innenleiter und dem Au-ßenleiter - angeordnet ist. Dieses elektrisch leitende Verbindungselement ist so dimensioniert und aus einem derartigen elektrisch leitenden Material hergestellt, dass der Abschlusswiderstand 19 dem Wellenwiderstand des Datenübertragungskanals 2, beispielsweise 50 Ω, entspricht.

Im Fall eines symmetrischen Datenübertragungskanals ist für den Gegentaktmode gemäß Fig. 4B ein elektrisch leitendes Verbindungselement, beispielsweise ein Balken, am axialen Ende 8 des Datenübertragungskanals 2 zwischen den beiden elektrischen Leitern 5 - den beiden Innenleitern - angeordnet. Dieses elektrisch leitende Verbindungselement ist so dimensioniert und aus einem derartigen elektrisch leitenden Material hergestellt, dass der Abschlusswiderstand 19 der doppelten single-ended Impedanz des Datenübertragungskanals 2, beispielsweise 100 Ω, entspricht.

Im Fall eines symmetrischen Datenübertragungskanals ist für den Gleichtaktmode gemäß Fig. 4C jeweils ein elektrisch leitendes Verbindungselement am axialen Ende 8 des Datenübertragungskanals 2 zwischen einem der beiden Innenleiter und der Außenleiterbeschichtung angeordnet. Jedes dieser elektrisch leitenden Verbindungselemente ist jeweils so dimensioniert und aus einem derartigen elektrisch leitenden Material hergestellt, dass der Abschlusswiderstand 19 der single-ended Impedanz des Datenübertragungskanals 2, beispielsweise 50 Ω, entspricht.

Wird über zwei Stromversorgungsleiter zusätzlich ein Datensignal übertragen, so sind die beiden Stromversorgungsleiter am axialen Ende 8 des Datenübertragungskanals 2 in einer ersten Variante jeweils offen, d. h. unbeschaltet. In einer zweiten Variante sind die beiden Stromversorgungsleiter am axialen Ende 8 über einen Kondensator mit einer hohen Kapazität miteinander verbunden. In einer dritten Variante sind die axialen Enden 8 der Stromversorgungsleiter über eine Serienschaltung aus einem Kondensator mit einer hohen Kapazität und einem Abschlusswiderstand miteinander verbunden.

Neben einem angepassten Abschluss der axialen Enden 8 des Datenübertragungskanals 2 ist alternativ auch eine nicht angepasste Terminierung mit einem nicht angepassten Abschlusswiderstand denkbar. In diesem Fall wird die Signalleistung der elektromagnetischen Welle nicht vollständig in störende Wärme an den axialen Enden 8 des Datenübertragungskanals 2 umgesetzt, sondern ein Teil der Signalenergie an den axialen Enden 8 reflektiert. Im Fall einer Totalreflexion im Fall von nicht beschalteten axialen Enden, d. h. offenen axialen Enden, der einzelnen elektrischen Leiter 5, oder einer Kurzschlussverbindung zwischen den einzelnen elektrischen Leitern 5 erfolgt keine störende Umsetzung der Signalleistung in Wärme. Für den Fall der Teil- und Totalreflexion kommt es zu Interferenzen der einzelnen reflektierten elektromagnetischen Wellen. Diese Interferenzen der einzelnen reflektierten elektromagnetischen Wellen resultieren in Fading- und Verzerrungseffekten des Empfangssignals in der Sende-Empfangs-Einheit 3. Zur Rekonstruktion der ursprünglich gesendeten elektrischen Signale aus den empfangenen elektrischen Signalen wird die obig erläuterte Einheit zur MIMO-Entzerrung 17 verwendet.

MIMO-Systeme können prinzipbedingt mit Mehrfachreflexionen sehr gut umgehen; ein Leerlauf an den Enden der Schiene stellt deshalb bezüglich der Signalübertragung kein Problem dar. Bei Verzicht auf die Terminierungen wird sogar ein besserer Signal-zu-Rauschverhältnis erwartet, da kein Anteil der im Nutzsignals enthaltenen Energie in den Terminierungen vernichtet wird.

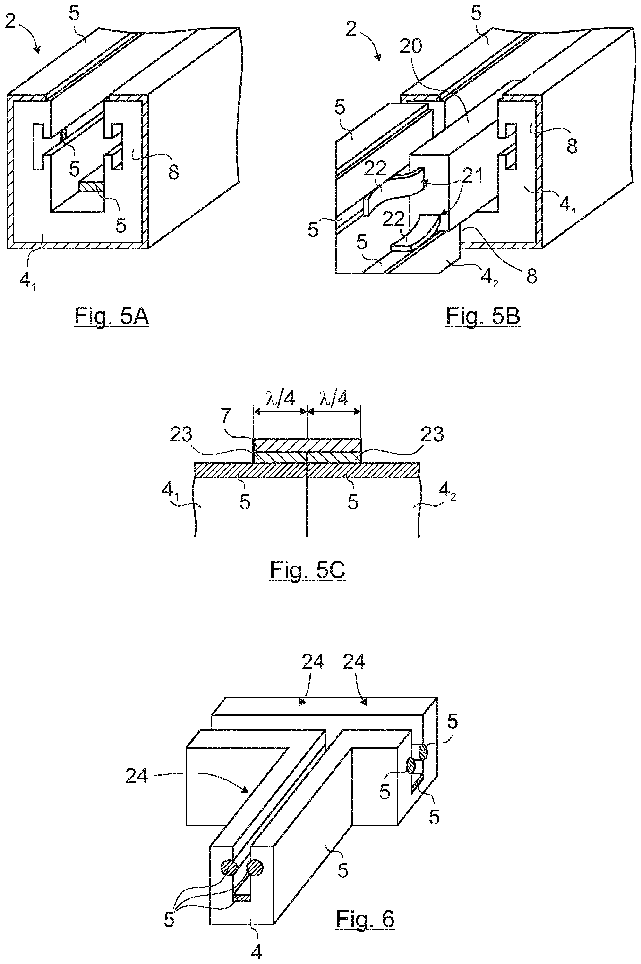

Im Folgenden wird anhand der Figuren 5A bis 5C die elektrische Verbindung zwischen elektrischen Leitern 5 in einem schienenbasierten Datenübertragungskanals 2 zwischen zwei stirnseitig miteinander verbundenen Schienen 4 erläutert.

In der isometrischen Darstellung der Fig. 5A ist das axiale Ende 8 einer Ausprägung eines elektrischen Datenübertragungskanals 2 gemäß Fig. 2F dargestellt. Sämtliche elektrische Leiter 5, die innerhalb der dielektrischen Schiene 4 angeordnet sind, sind nicht bis zum stirnseitigen Ende der dielektrischen Schiene 4 geführt. Dadurch, dass die Innenleiter des Datenübertragungskanals 2 an ihrem axialen Ende derart verkürzt sind, kann gemäß Fig. 5B ein dielektrisches Verbindungselement 20 im Bereich der axialen Enden 8 der Schienen 4 in die beiden stirnseitig miteinander zu verbindenden Schienen 4 eingefügt werden.

Das Verbindungelement 20 enthält für jedes Paar von miteinander zu verbindenden elektrischen Leitern 5 jeweils ein elektrisch leitendes Kontaktelement 21. An den beiden axialen Enden der einzelnen Kontaktelemente 21 sind jeweils Kontaktlaschen 22 ausgebildet, die im gesteckten Zustand der beiden Schienen 4 einen ausreichenden Kontaktdruck auf den jeweiligen elektrischen Leiter 5 ausüben. Das Verbindungselement 20 wird auch zur mechanischen Fixierung der beiden stirnseitig miteinander zu verbindenden Schienen 4 herangezogen. Hierzu sind bevorzugt Seitenwände des Verbindungselements 20 konisch ausgeformt, um mittels Presspassung eine kraftschlüssige Verbindung mit den benachbarten Schienen 4 zu realisieren. Alternativ ist auch mittels Kleben eine stoffschlüssige Verbindung oder mittels Ausformung von Rastelementen eine formschlüssige Verbindung möglich.

Alternativ ist auch eine elektrische und mechanische Verbindung von zwei stirnseitig miteinander zu verbindenden Schienen 4 ohne ein Verbindungselement 20 möglich. Hierzu sind die Innenleiter an einem axialen Ende gegenüber dem axialen Ende der dielektrischen Schiene 4 verlängert und mit einer Kontaktlasche auszubilden. Zur mechanischen Fixierung ist an einem axialen Ende der dielektrische Schiene 4 eine stirnseitige Verlängerung mit Konus oder Anfasung auszubilden, die in eine korrespondierende Ausnehmung am axialen Ende der weiteren Schiene 4 kraftschlüssig eingefügt ist.

Zur elektrischen Verbindung der metallischen Außenleiterbeschichtung auf zwei jeweils zu verbindenden dielektrischen Schienen 4 wird gemäß Fig. 5C die obig bereits erwähnte elektrisch sehr leitfähige Manschette 7 verwendet. Die elektrische Funktion der Manschette 7 lässt sich als Serienschaltung von zwei auf die Betriebsfrequenz abgestimmten Viertelwellenresonatoren beschreiben, die den elektrischen Leerlauf an den Enden der Manschette in einen Kurzschluss an der Stoßstelle zwischen den Schienensegmenten transformieren.

Hierzu ist die Manschette 7 metallisch ausgebildet und weist eine elektrische Länge in Höhe der halben Wellenlänge der elektromagnetischen Welle im schienenbasierten Datenübertragungskanal 2 auf. Die metallische Manschette 7 überlappt hierbei jeweils mit der Hälfte ihrer axialen Erstreckung, d. h. mit einer elektrischen Länge von einem Viertel der Wellenlänge, jede Außenleiter-beschichtung der beiden benachbarten Schienen 4. Zur Realisierung der resonanten Kopplung zwischen der metallischen Manschette 7 und der Außenleiterbeschichtung ist bevorzugt im Bereich der resonanten Kopplung auf der Außenleiterbeschichtung eine dielektrische Schicht 23 aufgebracht.

Neben der Verlängerung eines schienenbasierten Datenübertragungskanals 2 durch stirnseitige Verbindung mehrerer Schienen 4 ist auch eine Verzweigung in einem schienenbasierten Datenübertragungskanal 2 möglich. Aus Fig. 6 geht eine T-förmige Verzweigung eines schienenbasierten Datenübertragungskanals 2 mit insgesamt drei Verzweigungsarmen 24 hervor. Andere Ausformungen von Verzweigungen, beispielsweise eine Y-förmige Verzweigung, sind ebenfalls denkbar. Der Verzweigungswinkel zwischen den einzelnen Verzweigungsarmen 24 ist nicht zu klein, insbesondere nicht spitzwinklig, zu gestalten, um Reflexionen im Bereich der Verzweigung zu minimieren.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

## Patentansprüche

1. Datenübertragungssystem (1) aufweisend einen Datenübertragungskanal (2; 2₁, 2₂) und mehrere Sende- und Empfangs-Einheiten (3), wobei der Datenübertragungskanal (2; 2₁, 2₂) eine elektrische Leitung ist, welche eine Schiene (4; 4₁, 4₂) aus einem elektrisch isolierenden Material und wenigstens einen elektrischen Leiter (5) aufweist, wobei der wenigstens eine elektrische Leiter (5) jeweils in einer Längsachsrichtung entlang einer Längsachse (6) der Schiene (4; 4₁, 4₂) verläuft, wobei die Schiene (4; 4₁, 4₂) mantelflächenseitig von einem der elektrischen Leiter (5) umschlossen ist und/oder die Schiene (4; 4₁, 4₂) mindestens zwei der elektrischen Leiter (5) jeweils voneinander beabstandet, wobei die mehreren Sende- und Empfangs-Einheiten (3) entlang der Schiene (4; 4₁, 4₂) angeordnet sind und wobei die mehreren Sende- und Empfangs-Einheiten (3) jeweils eingerichtet sind, eine elektromagnetische Welle in die elektrische Leitung einzukoppeln oder aus der elektrischen Leitung auszukoppeln, wobei zwischen der Sende- und Empfangs-Einheit (3) und der elektrischen Leitung eine Koppelvorrichtung (13) zur elektromagnetischen Nahfeldkopplung zwischen der Sende-Empfangs-Einheit (3) und der elektrischen Leitung angeordnet ist, und wobei die Koppelvorrichtung (13) wenigstens zwei Koppelelemente (14) mit jeweils einem elektrischen Anschluss (15) und/oder wenigstens ein Koppelelement (13) mit jeweils zwei elektrischen Anschlüssen (15) aufweist,
**dadurch gekennzeichnet,**
**dass** die Sende-Empfangs-Einheit (3) eine Einheit zur MIMO-Entzerrung (17) und eine Einheit zur MIMO-Ansteuerung (18) aufweist, die jeweils mit den elektrischen Anschlüssen (15) der Koppelelemente (14) verbunden sind.

2. Datenübertragungssystem (1) nach Anspruch 1,
**dadurch gekennzeichnet,**
**dass** eine der Sende-Empfangs-Einheiten (3) die elektromagnetische Welle mittels Feldkopplung oder mittels galvanischer Kopplung ein- bzw. auskoppelt und die übrigen der Sende-Empfangs-Einheiten (3) die elektromagnetische Welle jeweils mittels Feldkopplung ein- bzw. auskoppelt.

3. Datenübertragungssystem (1) nach Anspruch 1 oder 2,
**dadurch gekennzeichnet,**
**dass** ausgehend von der Außenoberfläche der Schiene (4; 4₁, 4₂) entlang der Längserstreckung der Schiene (4; 4₁, 4₂) eine Ausnehmung (9) in der Schiene (4; 4₁, 4₂) ausgebildet ist.

4. Datenübertragungssystem (1) nach einem der Ansprüche 1 bis 3,
**dadurch gekennzeichnet,**
**dass** die Koppelvorrichtung (13) zwei Koppelelemente (14) mit jeweils einem elektrischen Anschluss (15), bevorzugt zwei E-Feld-Koppelelemente oder zwei H-Feld-Koppelelemente oder eine Kombination aus einem E-Feld-Koppelelement und einem H-Feldkoppelelement, aufweist.

5. Datenübertragungssystem (1) nach Anspruch 4,
**dadurch gekennzeichnet,**
**dass** die elektrischen Anschlüsse (15) von zwei E-Feld-Koppelelementen oder von zwei H-Feld-Koppelelementen jeweils in einem axialen Abstand von λ/4·(2n+1) entlang der Längserstreckung der Schiene (4; 4₁, 4₂) zueinander beabstandet sind, wobei λ die Wellenlänge der elektromagnetischen Welle und n ein ganzzahliger Faktor sind.

6. Datenübertragungssystem (1) nach Anspruch 4 oder 5,
**dadurch gekennzeichnet,**
**dass** die Einheit zur MIMO-Ansteuerung eingerichtet ist, in den elektrischen Anschluss (15) der beiden Koppelelemente (14) jeweils ein erstes elektrisches Signal und ein zweites elektrisches Signal einzuprägen, wobei das an dem einen Koppelelement (14) eingeprägte erste elektrische Signal gegenüber dem an dem anderen Koppelelement (14) eingeprägten ersten elektrischen Signal um 90° phasenverzögert ist und das an dem anderen Koppelelement (14) eingeprägte zweite elektrische Signal gegenüber dem an dem einen Koppelelement (14) eingeprägten zweiten elektrischen Signal um 90° phasenverzögert ist.

7. Datenübertragungssystem (1) nach einem der Ansprüche 1 bis 3,
**dadurch gekennzeichnet,**
**dass** das Koppelelement (13) mit zwei elektrischen Anschlüssen (15) ein erster elektrischer Leiter eines Richtkopplers ist, wobei der erste elektrische Leiter des Richtkopplers mit dem als zweiten elektrischen Leiter des Richtkopplers dienenden elektrischen Leiter (5) gekoppelt ist.

8. Datenübertragungssystem (1) nach einem der Ansprüche 1 bis 7,
**dadurch gekennzeichnet,**
**dass** die elektrische Leitung mehrere stirnseitig miteinander verbindbare Schienen (4₁, 4₂) aus einem elektrisch isolierenden Material und zugehörige miteinander verbindbare elektrischen Leiter (5) aufweist.

9. Datenübertragungssystem (1) nach Anspruch 8,
**dadurch gekennzeichnet,**
**dass** außenleiterseitig zwei miteinander verbindbare elektrische Leiter (5) über eine metallische Manschette (7) elektrisch miteinander verbunden sind, wobei die metallische Manschette (7) jeweils resonant mit den außenleiterseitigen elektrischen Leitern (5) der stirnseitig miteinander verbindbaren Schienen (4₁, 4₂) gekoppelt ist.

10. Datenübertragungssystem (1) nach Anspruch 9,
**dadurch gekennzeichnet,**
**dass** innenleiterseitig zwei miteinander verbindbare elektrische Leiter (5) über ein Verbindungselement (20) mit einem Kontaktelement (21) elektrisch verbunden sind oder dadurch miteinander elektrisch verbunden sind, dass ein elektrischer Leiter (5) gegenüber der Schiene (4; 4₁, 4₂) axial verlängert ausgebildet ist.

11. Datenübertragungssystem (1) nach einem der Ansprüche 1 bis 10,
**dadurch gekennzeichnet,**
**dass** die elektrische Leitung sich in mindestens zwei elektrische Leitungen verzweigt, wobei sich die Schiene (4; 4₁, 4₂) in mindestens zwei Schienen (4; 4₁, 4₂) und die zugehörigen elektrischen Leiter (5) sich jeweils in mindestens zwei elektrische Leiter (5) verzweigen.

12. Datenübertragungssystem (1) nach einem der Ansprüche 1 bis 11,
**dadurch gekennzeichnet,**
**dass** zwischen mehreren elektrischen Leitern (5) oder zwischen mehreren Paaren (12) von elektrischen Leitern (5) jeweils ein Schirmungsblech (25) entlang der Längserstreckung der Schiene (4; 4₁, 4₂) angeordnet ist.

## Claims

1. Data transmission system (1) having a data transmission channel (2; 2₁, 2₂) and a plurality of transmission and reception units (3), wherein the data transmission channel (2; 2₁, 2₂) is an electrical line, which has a rail (4; 4₁, 4₂) made of an electrically insulating material and has at least one electrical conductor (5), wherein the at least one electrical conductor (5) in each case runs in a longitudinal direction along a longitudinal axis (6) of the rail (4; 4₁, 4₂), wherein the lateral surface of the rail (4; 4₁, 4₂) is surrounded by one of the electrical conductors (5) and/or at least two of the electrical conductors (5) are in each case kept apart from one other by the rail (4; 4₁, 4₂), wherein the plurality of transmission and reception units (3) are arranged along the rail (4; 4₁, 4₂) and wherein the plurality of transmission and reception units (3) are each configured to couple an electromagnetic wave into the electrical line or out of the electrical line, wherein a coupling device (13) for electromagnetic near-field coupling between the transmission and reception unit (3) and the electrical line is arranged between the transmission and reception unit (3) and the electrical line, and wherein the coupling device (13) has at least two coupling elements (14) with in each case an electrical terminal (15) and/or has at least one coupling element (13) with in each case two electrical terminals (15),
**characterized**
**in that** the transmission and reception unit (3) has a unit for MIMO equalization (17) and a unit for MIMO control (18) which are in each case connected to the electrical terminals (15) of the coupling elements (14).

2. Data transmission system (1) according to Claim 1,
**characterized**
**in that** one of the transmission and reception units (3) couples the electromagnetic wave in or out, respectively, by means of field coupling or by means of galvanic coupling, and the rest of the transmission and reception units (3) in each case couple the electromagnetic wave in or out, respectively, by means of field coupling.

3. Data transmission system (1) according to Claim 1 or 2,
**characterized**
**in that** a recess (9) is formed in the rail (4; 4₁, 4₂) starting from the outer surface of the rail (4; 4₁, 4₂) along the longitudinal extent of the rail (4; 4₁, 4₂).

4. Data transmission system (1) according to one of Claims 1 to 3, **characterized**
**in that** the coupling device (13) has two coupling elements (14) with in each case an electrical terminal (15), preferably two E-field coupling elements or two H-field coupling elements or a combination of one E-field coupling element and one H-field coupling element.

5. Data transmission system (1) according to Claim 4,
**characterized**
**in that** the electrical terminals (15) of two E-field coupling elements or of two H-field coupling elements are in each case kept apart from one other by an axial distance of λ/4 · (2n+1) along the longitudinal extent of the rail (4; 4₁, 4₂), wherein λ is the wavelength of the electromagnetic wave and n is an integer factor.

6. Data transmission system (1) according to Claim 4 or 5,
**characterized**
**in that** the unit for MIMO control is configured to inject a first electrical signal and a second electrical signal, respectively, into the electrical terminal (15) of the two coupling elements (14), wherein the first electrical signal injected at the one coupling element (14) is phase-delayed by 90° with respect to the first electrical signal injected at the other coupling element (14) and the second electrical signal injected at the other coupling element (14) is phase-delayed by 90° with respect to the second electrical signal injected at the one coupling element (14).

7. Data transmission system (1) according to one of Claims 1 to 3, **characterized**
**in that** the coupling element (13) with two electrical terminals (15) is a first electrical conductor of a directional coupler, wherein the first electrical conductor of the directional coupler is coupled to the electrical conductor (5) serving as a second electrical conductor of the directional coupler.

8. Data transmission system (1) according to one of Claims 1 to 7, **characterized**
**in that** the electrical line has a plurality of rails (4₁, 4₂) made of an electrically insulating material which can be connected to one other end-to-end and has associated electrical conductors (5) which can be connected to one other.

9. Data transmission system (1) according to Claim 8,
**characterized**
**in that**, on the outer conductor side, two electrical conductors (5) which can be connected to one other are electrically connected to one other by way of a metallic sleeve (7), wherein the metallic sleeve (7) is resonantly coupled in each case to the electrical conductors (5), on the outer conductor side, of the rails (4₁, 4₂) which can be connected to one other end-to-end.

10. Data transmission system (1) according to Claim 9,
**characterized**
**in that**, on the inner conductor side, two electrical conductors (5) which can be connected to one other are electrically connected to a contact element (21) by way of a connecting element (20) or are electrically connected to one other in that one electrical conductor (5) is formed axially extended with respect to the rail (4; 4₁, 4₂).

11. Data transmission system (1) according to one of Claims 1 to 10, **characterized**
**in that** the electrical line branches into at least two electrical lines, wherein the rail (4; 4₁, 4₂) branches into at least two rails (4; 4₁, 4₂) and the associated electrical conductors (5) in each case branch into at least two electrical conductors (5).

12. Data transmission system (1) according to one of Claims 1 to 11, **characterized**
**in that** between a plurality of electrical conductors (5) or between a plurality of pairs (12) of electrical conductors (5) a shielding plate (25) is arranged in each case along the longitudinal extent of the rail (4; 4₁, 4₂).

## Revendications

1. Système de transmission de données (1) comprenant un canal de transmission de données (2 ; 2₁, 2₂) ainsi que plusieurs unités d'émission et de réception (3), dans lequel le canal de transmission de données (2 ; 2₁, 2₂) consiste en une ligne électrique qui comprend un rail (4 ; 4₁, 4₂) constitué d'un matériau électriquement isolant et au moins un conducteur électrique (5), dans lequel ledit au moins un conducteur électrique (5) s'étend respectivement dans une direction axiale longitudinale le long d'un axe longitudinal (6) du rail (4 ; 4₁, 4₂), dans lequel ledit au moins un conducteur électrique (5) est entouré par le rail (4 ; 4₁, 4₂), dans lequel le rail (4 ; 4₁, 4₂) est entouré du côté de la surface de l'enveloppe par l'un des conducteurs électriques (5) et/ou par le rail (4 ; 4₁, 4₂) qui espace respectivement au moins deux des conducteurs électriques (5) l'un de l'autre, dans lequel les multiples unités d'émission et de réception (3) s'étendent le long du rail (4 ; 4₁, 4₂) et la pluralité d'unités d'émission et de réception (3) sont chacune agencées de manière à coupler une onde électromagnétique dans le conducteur électrique ou à découpler celle-ci du conducteur électrique, dans lequel, entre l'unité d'émission et de réception (3) et la ligne électrique, un dispositif de couplage (13) est installé dans le but de réaliser un couplage électromagnétique en champ proche entre l'unité d'émission et de réception (3) et la ligne électrique, et dans lequel le dispositif de couplage (13) comprend au moins deux éléments de couplage (14) qui comportent chacun un raccordement électrique (15) et/ou au moins un élément de couplage (13) qui comporte deux raccordements électriques (15), **caractérisé en ce que** l'unité d'émission et de réception (3) comprend une unité d'égalisation MIMO (17) et une unité de commande MIMO (18) qui sont respectivement reliées aux connexions électriques (15) des éléments de couplage (14).

2. Système de transmission de données (1) selon la revendication 1, **caractérisé en ce que** l'une des unités d'émission et de réception (3) injecte ou extrait l'onde électromagnétique par couplage de champ ou par couplage galvanique, et les autres unités d'émission et de réception (3) injectent ou extraient l'onde électromagnétique respectivement par couplage de champ.

3. Système de transmission de données (1) selon la revendication 1 ou 2, **caractérisé en ce qu'**un évidement (9) est formé à l'intérieur du rail (4 ; 4₁, 4₂) en partant de la surface extérieure du rail (4 ; 4₁, 4₂) le long de l'étendue longitudinale du rail (4 ; 4₁, 4₂).

4. Système de transmission de données (1) selon l'une des revendications 1 à 3, **caractérisé en ce que** le dispositif de couplage (13) comprend deux éléments de couplage (14) qui comportent chacun une connexion électrique (15), et de préférence deux éléments de couplage de champ E ou deux éléments de couplage de champ H ou une combinaison d'un élément de couplage de champ E et d'un élément de couplage de champ H.

5. Système de transmission de données (1) selon la revendication 4, **caractérisé en ce que** les connexions électriques (15) de deux éléments de couplage de champ E ou de deux éléments de couplage de champ H sont respectivement espacées d'une distance axiale de λ/4·(2n+1) le long de la longueur du rail (4 ; 4₁, 4₂), où À est la longueur d'onde de l'onde électromagnétique et où n est un facteur entier.

6. Système de transmission de données (1) selon la revendication 4 ou 5, **caractérisé en ce que** l'unité de commande MIMO est agencée de manière à introduire dans la connexion électrique (15) des deux éléments de couplage (14) respectivement un premier signal électrique et un second signal électrique, le premier signal électrique introduit dans l'un des éléments de couplage (14) étant déphasé de 90° par rapport au premier signal électrique qui est introduit dans l'autre élément de couplage (14), et le second signal électrique introduit dans l'autre élément de couplage (14) étant déphasé de 90° par rapport au second signal électrique qui est introduit dans l'un des éléments de couplage (14).

7. Système de transmission de données (1) selon l'une des revendications 1 à 3, **caractérisé en ce que** l'élément de couplage (13) qui comporte deux connexions électriques (15) est un premier conducteur électrique d'un coupleur directionnel, dans lequel le premier conducteur électrique du coupleur directionnel est couplé au conducteur électrique (5) qui fait office de second conducteur électrique du coupleur directionnel.

8. Système de transmission de données (1) selon l'une des revendications 1 à 7, **caractérisé en ce que** la ligne électrique comprend plusieurs rails (4₁, 4₂) constitués d'un matériau électriquement isolant qui peuvent être reliés les uns aux autres sur les faces frontales ainsi que des conducteurs électriques (5) correspondants qui peuvent être reliés les uns aux autres.

9. Système de transmission de données (1) selon la revendication 8, **caractérisé en ce que**, du côté du conducteur extérieur, deux conducteurs électriques (5) qui peuvent être reliés l'un à l'autre sont reliés électriquement l'un à l'autre par l'intermédiaire d'un manchon métallique (7), le manchon métallique (7) étant couplé de manière résonante aux conducteurs électriques (5) du côté du conducteur extérieur des rails (4₁, 4₂) qui peuvent être reliés l'un à l'autre du côté frontal.

10. Système de transmission de données (1) selon la revendication 9, **caractérisé en ce que**, du côté du conducteur intérieur, deux conducteurs électriques (5) qui peuvent être reliés entre eux sont reliés électriquement à un élément de contact (21) par l'intermédiaire d'un élément de liaison (20) ou sont reliés électriquement entre eux par l'intermédiaire d'un conducteur électrique (5) qui s'étend axialement par rapport au rail (4 ; 4₁, 4₂).

11. Système de transmission de données (1) selon l'une des revendications 1 à 10, **caractérisé en ce que** la ligne électrique se ramifie en au moins deux lignes électriques, dans lequel le rail (4 ; 4₁, 4₂) se ramifie en au moins deux rails (4 ; 4₁, 4₂) et les conducteurs électriques (5) correspondants se ramifient chacun en au moins deux conducteurs électriques (5).

12. Système de transmission de données (1) selon l'une des revendications 1 à 11, **caractérisé en ce qu'**une tôle de blindage (25) est disposée entre plusieurs conducteurs électriques (5) ou entre plusieurs paires (12) de conducteurs électriques (5) le long de la longueur du rail (4 ; 4₁, 4₂).
